# EUROPEAN PATENT SPECIFICATION

(11) **EP 4 171 144 B1**
(45) Date of publication and mention of the grant of the patent: **01.01.2025**
(21) Application number: 21841308.6
(22) Date of filing: 09.07.2021
(51) Int. Cl.: H04L 5/00, H04W 74/0833, H04W 52/02

(54) **PHYSICAL DOWNLINK CONTROL CHANNEL (PDCCH) MONITORING METHOD AND APPARATUS, AND TERMINAL**
VERFAHREN UND VORRICHTUNG ZUR ÜBERWACHUNG EINES PHYSIKALISCHEN DOWNLINK-STEUERKANALS (PDCCH) UND ENDGERÄT
PROCÉDÉ ET APPAREIL DE SURVEILLANCE DE CANAL PHYSIQUE DE COMMANDE DE LIAISON DESCENDANTE (PDCCH) ET TERMINAL

(30) Priority: 17.07.2020 CN 202010689787
(43) Date of publication of application: 26.04.2023
(60) Divisional application: 24212541.7
(73) Proprietor: Huawei Technologies Co., Ltd., Longgang District Shenzhen, Guangdong 518129 (CN)
(72) Inventor: XUE, Yifan, Shenzhen, Guangdong 518129 (CN); XUE, Lixia, Shenzhen, Guangdong 518129 (CN); ZHANG, Zhanzhan, Shenzhen, Guangdong 518129 (CN); TIE, Xiaolei, Shenzhen, Guangdong 518129 (CN); XU, Haibo, Shenzhen, Guangdong 518129 (CN)
(74) Representative: Isarpatent
(86) International application number: PCT/CN2021/105573
(87) International publication number: WO 2022/012440

(56) References cited:
- CN-A- 109 565 430
- CN-A- 110 831 185
- US-A1- 2013 021 948
- ERICSSON: "UE power saving using search space set switching", vol. RAN WG1, no. e-Meeting; 20200525 - 20200605, 16 May 2020 (2020-05-16), XP051886104, Retrieved from the Internet <URL:https://ftp.3gpp.org/tsg_ran/WG1_RL1/TSGR1_101-e/Docs/R1-2004360.zip R1-2004360 UE power saving using search space set switching.docx> [retrieved on 20200516]
- NOKIA ET AL: "Remaining issues on DL signals and channels", vol. RAN WG1, no. e-Meeting; 20200224 - 20200228, 14 February 2020 (2020-02-14), XP051852898, Retrieved from the Internet <URL:https://ftp.3gpp.org/tsg_ran/WG1_RL1/TSGR1_100_e/Docs/R1-2000501.zip R1-2000501_DL Signals and Channels_NOKIA.docx> [retrieved on 20200214]
- ERICSSON: "UE power saving using search space set switching", 3GPP DRAFT; R1-2004360, vol. RAN WG1, 16 May 2020 (2020-05-16), pages 1 - 6, XP051886104

## Description

This disclosure generally relates to the field of communications technologies.

### TECHNICAL FIELD

The invention, in particular, pertains to physical downlink control channel (PDCCH) monitoring methods, and an apparatus.

### BACKGROUND

A base station sends downlink control information (DCI) to a terminal by using a physical downlink control channel (PDCCH). The DCI includes downlink data scheduling information for indicating a time-frequency resource location and a configuration parameter for the terminal to receive and demodulate data.

When receiving the DCI, the terminal needs to perform blind detection (BD) on a plurality of PDCCH candidates in a downlink control region. A group of PDCCH candidates on which the terminal needs to perform blind detection form a search space set group ( SSSG). The terminal may monitor one or more search space set groups based on a configuration of the base station, to find out whether the base station sends a PDCCH to the terminal.

In a conventional technology, for an unlicensed spectrum, the terminal may switch between search space set groups during PDCCH monitoring. For example, the base station configures two search space set groups (a search space set group 0 and a search space set group 1) for the terminal, and monitoring periods of the search space set group 0 and the search space set group 1 are different. When the base station preempts no channel, the terminal monitors a PDCCH based on the search space set group 0. When the base station preempts a channel, the terminal monitors a PDCCH based on the search space set group 1. The terminal monitors a PDCCH by using a more proper monitoring period under different conditions, to achieve an objective such as energy saving. However, for a licensed spectrum, because the base station always occupies a channel, it is inappropriate for the terminal to switch between search space set groups in the foregoing manner.

The document Ericsson "UE power saving using search space switching", 3GPP DRAFT, R1-2004360, vol. RAN WG1, no. e-Meeting, 20200525-20200605, May 16, 2020, XP051886104 (https://ftp.3gpp.org/tsg_ran/WG1_RL1/TSGR1_101-e/Docs/R1-2004360.zip) discloses an NR-U SS set switching mechanism for UE PS purposes.

The document Nokia et al. "Remaining issues on DL signals and channels", 3GPP DRAFT, R1-2000501, vol. RAN WG1, no. e-Meeting, 20200224-20200228, February 14, 2020, XP051852898 (https://ftp.3gpp.org/tsg_ran/WG1_RL1/TSGR1_100_e/Docs/R1-2000501.zip) discloses solutions and techniques for NR unlicensed related to DL physical channels and signals in which UE search space switching mechanisms are applied.

### SUMMARY

The object of the present invention is to physical downlink control channel (PDCCH) monitoring methods, and an apparatus. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "not claimed", "example", ... aspect according to an example", "the disclosure describes", or "the disclosure" describe technical teaching which relates to the understanding of the invention or its embodiments, which, however, are not claimed assuch, and, thus, do not fall within the scope of the appended claims. Embodiments of this invention provide physical downlink control channel (PDCCH) monitoring methods, and an apparatus to resolve a problem in a conventional technology that for a licensed spectrum, it is inappropriate for a terminal to switch between search space set groups based on whether a base station preempts a channel.
To achieve the foregoing objective, the following technical solutions are used in this application.

According to a first aspect, a physical downlink control channel (PDCCH) monitoring method is provided. The method is applied to a terminal, and the method includes: The terminal receives search space information configured by a network device. The search space information includes information about a first search space set group and a second search space set group. When the terminal monitors a PDCCH based on the second search space set group, if the terminal receives downlink control information (DCI) used for data scheduling in a user equipment-specific search space, the terminal stops monitoring a PDCCH based on the second search space set group, and starts monitoring a PDCCH based on the first search space set group. If the terminal receives DCI used for data scheduling in a type 3 common search space, the terminal maintains monitoring a PDCCH based on the second searc space set group. The DCI used for data scheduling comprises DCI scrambled by a cell radio network temporary identifier, by a modulation and coding scheme cell radio network temporary identifier, or by a configured scheduling radio network temporary identifier.

Based on the foregoing technical solution, the terminal may switch between the search space set groups based on a type of received information. When a monitoring period of each search space in the second search space set group is relatively large, and a monitoring period of each search space in the first search space set group is relatively small, switching of the terminal to the first search space set group to monitor a PDCCH helps to quickly complete data transmission and reduce a data transmission delay. In addition, the terminal selects, based on whether data needs to be scheduled, a search space set group with a proper monitoring period to monitor a PDCCH. When there is no data transmission, the terminal may monitor a PDCCH based on the second search space set group with a relatively large monitoring period, to reduce power consumption of the terminal and prolong a standby time of the terminal.

In a possible implementation, the first search space set group has a first configuration parameter, and the second search space set group has a second configuration parameter; and a parameter related to time domain monitoring in the second configuration parameter is a subset of a parameter related to time domain monitoring in the first configuration parameter; and/or a parameter related to frequency domain monitoring in the second configuration parameter is a subset of a parameter related to frequency domain monitoring in the first configuration parameter.

The first configuration parameter of the first search space set group and the second configuration parameter of the second search space set group are configured in a nested relationship, which can avoid scheduling loss when the terminal and the network device are not aligned. In this way, when two sides of slots of the network device and the terminal are not aligned due to some errors, scheduling information sent by the network device can still be received by the terminal.

According to a second aspect, a physical downlink control channel PDCCH monitoring method is provided. The method is applied to a terminal, and the method includes: The terminal receives search space information configured by a network device. The search space information includes information about a first search space set group and a second search space set group. When the terminal monitors a PDCCH based on the second search space set group, if the terminal sends a first signal to the network device, the terminal stops, after the first signal is sent, monitoring a PDCCH based on the second search space set group, and starts monitoring a PDCCH based on the first search space set group. The first signal includes a random access preamble or a physical random access channel (PRACH).

Based on the foregoing technical solution, the terminal may determine, based on a type of the first signal sent to the network device, whether to switch between the search space set groups, so that when the terminal is in an abnormal state and initiates a random access procedure to request to recover to normal, the terminal may switch to the first search space set group with a relatively small monitoring period, and monitor a PDCCH based on the first search space set group, which can reduce PDCCH monitoring, reduce terminal power consumption, and reduce signaling overheads.

According to a third aspect, a communications apparatus is provided. The communications apparatus may be a terminal, a chip in the terminal, or a system on chip. The communications apparatus includes a processor and a memory. The memory stores instructions. When the instructions are executed by the processor, the communications apparatus is enabled to perform the steps of the method according to the first aspect.

According to a fourth aspect, a communications apparatus is provided. The communications apparatus may be a terminal, a chip in the terminal, or a system on chip. The communications apparatus includes a processor and a memory. The memory stores instructions. When the instructions are executed by the processor, the communications apparatus is enabled to perform steps of the method according to the second aspect.

According to a fifth aspect, although not claimed, a communications apparatus is provided. The communications apparatus includes a communications module and a processing module. The communications module is configured to receive search space information configured by a network device. The search space information includes information about a first search space set group and a second search space set group. The processing module is configured to: when a PDCCH is monitored based on the second search space set group, if downlink control information (DCI) used for data scheduling is received, stop monitoring a PDCCH based on the second search space set group, and start monitoring a PDCCH based on the first search space set group.

According to a sixth aspect, although not claimed, a communications apparatus is provided. The communications apparatus includes a communications module and a processing module. The communications module is configured to receive search space information configured by a network device. The search space information includes information about a first search space set group and a second search space set group. The processing module is configured to: when a PDCCH is monitored based on the second search space set group, if a first signal is sent to the network device, stop, after the first signal is sent, monitoring a PDCCH based on the second search space set group, and start monitoring a PDCCH based on the first search space set group. The first signal includes at least one of the following signals or channels: a random access preamble, a scheduling request (SR), a hybrid automatic repeat request negative acknowledgment (NACK), and/or a physical uplink shared channel (PUSCH).

According to a seventh aspect, although not claimed, a computer-readable storage medium is provided. The computer-readable storage medium stores instructions. When the computer-readable storage medium runs on a terminal, the terminal may be enabled to perform the method according to any design of the first aspect and the second aspect.

According to an eighth aspect, although not claimed, a computer program product including instructions is provided. When the computer program product runs on a terminal, the terminal is enabled to perform the method according to any design of the first aspect and the second aspect.

According to a ninth aspect, although not claimed, a chip is provided. The chip includes a processor. When the processor executes instructions, the processor is configured to perform the method according to any design of the first aspect and the second aspect. The instructions may come from a memory inside the chip, or may come from a memory outside the chip. Optionally, the chip further includes an input/output circuit.

According to a tenth aspect, although not claimed, a communications system is provided, including a network device and a terminal. The terminal is configured to perform the PDCCH monitoring method according to any design of the first aspect or the second aspect.

The PDCCH monitoring method, and the apparatus that are provided in the embodiments of this application have the following advantages:

The terminal receives information about one or more search space set groups configured by the base station. Because monitoring periods of search spaces in search space set groups may be different, when the terminal monitors a PDCCH based on a second search space set group, if the terminal receives DCI used for data scheduling, the terminal may switch between the search space set groups, and start monitoring a PDCCH based on a first search space set group. When a monitoring period of each search space in the second search space set group is relatively large, and a monitoring period of each search space in the first search space set group is relatively small, switching of the terminal to the first search space set group with a relatively small monitoring period to monitor a PDCCH helps to quickly complete data transmission and reduce a data transmission delay. The terminal selects, based on whether data needs to be scheduled, a search space set group with a proper monitoring period to monitor a PDCCH. When there is no data transmission, the terminal may monitor a PDCCH based on the second search space set group with a relatively large monitoring period, to reduce power consumption of the terminal and prolong a standby time of the terminal.

### BRIEF DESCRIPTION OF DRAWINGS

FIG. 1 is a schematic diagram of a scenario of a PDCCH monitoring method according to an embodiment of this application;
FIG. 2 is a schematic diagram of a data transmission process according to an embodiment of this application;
FIG. 3 is a schematic diagram of a structure of a terminal according to an embodiment of this application;
FIG. 4 is a schematic flowchart of steps of a PDCCH monitoring method according to an embodiment of this application;
FIG. 5(a) is a schematic diagram of an interface of a terminal during video buffering according to an embodiment of this application;
FIG. 5(b) is a schematic diagram of an interface of a terminal in a video playing process according to an embodiment of this application;
FIG. 6 is a schematic flowchart of steps of another PDCCH monitoring method according to an embodiment of this application;
FIG. 7 is a schematic diagram of a time relationship of switching of a terminal between search space set groups according to an embodiment of this application;
FIG. 8 is a schematic diagram of a contention-free-based random access procedure according to an embodiment of this application;
FIG. 9 is a schematic diagram of a contention-based random access procedure according to an embodiment of this application;
FIG. 10 is a schematic diagram of a process of starting a random access contention resolution timer according to an embodiment of this application;
FIG. 11 is a schematic diagram of a process of starting a discontinuous reception downlink retransmission timer according to an embodiment of this application;
FIG. 12 is a schematic diagram of another process of starting a discontinuous reception downlink retransmission timer according to an embodiment of this application;
FIG. 13 is a schematic diagram of a process of starting or restarting a first search space set group timer according to an embodiment of this application;
FIG. 14 is a schematic diagram of another process of starting or restarting a first search space set group timer according to an embodiment of this application;
FIG. 15 is a schematic diagram of a structure of a communications apparatus according to an embodiment of this application; and
FIG. 16 is a schematic diagram of a structure of a chip according to an embodiment of this application.

### DESCRIPTION OF EMBODIMENTS

To clearly describe the technical solutions in embodiments of this application, words such as "first" and "second" are used in embodiments of this application to distinguish between same items or similar items that have basically the same functions or purposes. For example, a first search space set group and a second search space set group are merely used to distinguish different search space set groups, and do not limit numbers and an execution order thereof.

It should be noted that, in embodiments of this application, a term such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. The scope of the present invention is determined by the scope of the appended claims.

A network architecture and a service scenario described in embodiments of this application are intended to describe the technical solutions in embodiments of this application more clearly, and do not constitute any limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

In embodiments of this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. A character "/" usually indicates an "or" relationship between associated objects, and "at least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In the embodiments of this application, "configuration" means configuration using radio resource control (RRC) signaling, configuration using a MAC control element (MAC CE), configuration using DCI, or configuration using other signaling. Correspondingly, in the embodiments of this application, "indication" may be indication using RRC signaling, indication using a MAC CE, or indication using DCI, or indication using other signaling.

Steps in a PDCCH monitoring method provided in the embodiments of this application are merely examples. Not all steps are mandatory steps, or not all content in each piece of information or message is mandatory. In a use process, addition or deletion may be performed as required.

For a same step or steps or messages having a same function in the embodiments of this application, mutual reference may be made between different embodiments.

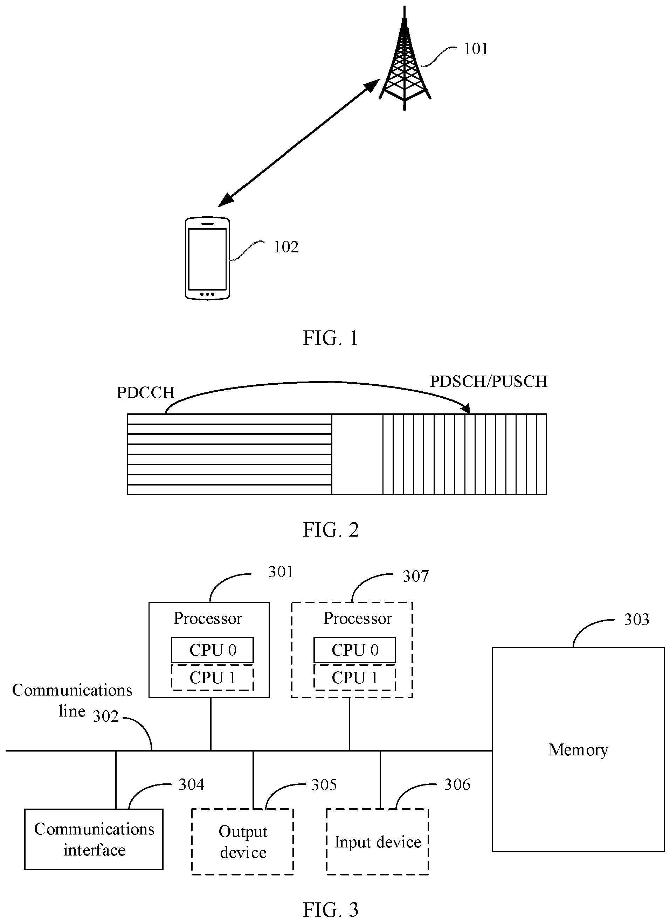

FIG. 1 is a schematic diagram of a scenario of a PDCCH monitoring method according to an embodiment of this application. The scenario in FIG. 1 includes a network device 101 and a terminal 102. Generally, data transmission between the network device and the terminal is performed based on the following procedure: The network device sends DCI to the terminal. The DCI includes downlink data scheduling information. The network device informs, by using the downlink data scheduling information, the terminal of a time-frequency resource location and a configuration parameter (for example, a modulation and coding scheme (MCS) or a redundancy version (RV) for receiving and demodulating downlink data. Then, the network device sends, at the time-frequency resource location indicated in the DCI, corresponding downlink data by using the configuration parameter indicated in the DCI, and the terminal receives the downlink data at a corresponding location by using a corresponding parameter. Alternatively, the DCI includes uplink data scheduling information, the terminal sends, at a time-frequency resource location indicated in the DCI, corresponding uplink data by using a configuration parameter indicated in the DCI, and the network device receives the uplink data at a corresponding location by using a corresponding parameter.

For the foregoing process, refer to FIG. 2. A PDCCH carries DCI, a physical downlink shared channel (PDSCH) carries downlink data, and a physical uplink shared channel (PUSCH) carries uplink data.

In this embodiment of this application, the network device 101 shown in FIG. 1 may be a base station, a base station controller, or the like for wireless communication. For example, the base station may include various types of base stations, for example, a micro base station (also referred to as a small cell), a macro base station, a relay station, or an access point. This is not specifically limited in this embodiment of this application. In this embodiment of this application, the base station may be a base transceiver station (BTS) in a global system for mobile communications (GSM) or code division multiple access (CDMA), a node B in wideband code division multiple access (WCDMA), an evolved node B (eNB, or e-NodeB) in long term evolution (LTE), an eNB in an internet of things (IoT) or a narrowband internet of things (NB-IoT), or a base station in a future 5G mobile communications network or a future evolved public land mobile network (PLMN). This is not limited in this embodiment of this application. In this embodiment of this application, an apparatus configured to implement a function of the network device may be the network device, or may be an apparatus that can support the network device in implementing the function, for example, a chip system. In this embodiment of this application, an example in which the apparatus configured to implement a function of the network device is the network device is used to describe the technical solutions provided in the embodiments of this application.

In this embodiment of this application, the network device, for example, a base station, generally includes a baseband unit (BBU), a remote radio unit (RRU), an antenna, and a feeder configured to connect the RRU and the antenna. The BBU is configured to perform signal modulation. The RRU is configured to perform radio frequency processing. The antenna is configured to perform conversion between a guided wave on a cable and a space wave in air. On one hand, the distributed base station greatly shortens a length of the feeder between the RRU and the antenna, which can reduce signal loss and reduce costs of the feeder. On the other hand, the RRU and the antenna are small and can be installed anywhere, so that network planning is more flexible. Other than the RRU, all BBUs may be placed in a central office (CO). In this centralized manner, the number of base station equipment rooms can be greatly reduced, thereby reducing energy consumption of auxiliary devices, especially air conditioners, and greatly reducing carbon emission. In addition, distributed BBUs can be centrally managed and scheduled after centralized to form a BBU baseband pool, so that resource allocation is more flexible. In this mode, all physical base stations evolve into virtual base stations. All the virtual base stations share information such as data transmission and reception and channel quality in the BBU baseband pool and cooperate with each other to implement joint scheduling.

In some deployments, the base station may include a centralized unit (CU) and a distributed unit (DU). The base station may further include an active antenna unit (AAU). The CU implements some functions of the base station, and the DU implements some functions of the base station. For example, the CU is responsible for processing a non-real-time protocol and service, to implement functions of radio resource control (RRC) and packet data convergence protocol (PDCP) layers. The DU is responsible for processing a physical layer protocol and a real-time service, to implement functions of radio link control (RLC), media access control (MAC), and physical (PHY) layers. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling or PDCP layer signaling may also be considered as being sent by the DU or sent by the DU and the AAU. It may be understood that the network device may be a device including one or more of a CU node, a DU node, and an AAU node. In addition, the CU may be assigned as a network device in a RAN, or the CU may be assigned as a network device in a core network (CN). This is not limited herein.

The terminal 102 shown in FIG. 1 is a device having a wireless transceiver function. The terminal may be deployed on land, including indoor, outdoor, handheld, or in-vehicle forms, or may be deployed on a water surface (such as a ship), or may be deployed in air (for example, on an airplane, a balloon, or a satellite). The terminal device may be user equipment (UE). The UE includes a handheld device, a vehicle, an in-vehicle device, a wearable device, or a computing device having a wireless communications function. For example, the UE may be a mobile phone, a tablet computer, or a computer having a wireless transceiver function. Alternatively, the terminal device may be a virtual reality (VR) terminal device, an augmented reality (AR) terminal device, a wireless terminal in industrial control, a wireless terminal in self-driving, a wireless terminal in telemedicine, a wireless terminal in a smart grid, a wireless terminal in a smart city, a wireless terminal in a smart home, or the like. In this embodiment of this application, an apparatus configured to implement a function of the terminal may be the terminal, or may be an apparatus that supports the terminal in implementing the function, for example, a chip system. In this embodiment of this application, the chip system may include a chip, or may include a chip and another discrete component. In this embodiment of this application, an example in which the apparatus configured to implement a function of the terminal is the terminal is used to describe the technical solutions provided in the embodiments of this application.

For example, FIG. 3 is a schematic diagram of a structure of a terminal. As shown in FIG. 3, the terminal includes at least one processor 301, a communications line 302, a memory 303, and at least one communications interface 304.

The processor 301 may be a general-purpose central processing unit (CPU), a microprocessor, an application-specific integrated circuit (ASIC), or one or more integrated circuits configured to control program execution of the solutions in this application.

The communications line 302 may include a path, to transfer information between the foregoing components.

The communications interface 304 uses any apparatus such as a transceiver to communicate with another device or a communications network such as an Ethernet, a RAN, or a wireless local area network (WLAN).

The memory 303 may be a read-only memory (ROM) or another type of static storage device that can store static information and instructions, or a random access memory (RAM) or another type of dynamic storage device that can store information and instructions, or may be an electrically erasable programmable read-only memory (EEPROM), a compact disc read-only memory (CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, and is connected to the processor by using the communications line 302. Alternatively, the memory may be integrated with the processor. The memory provided in embodiments of this application may be usually nonvolatile. The memory 303 is configured to store computer-executable instructions for performing the solutions in this application, and the processor 301 controls execution. The processor 301 is configured to execute computer-executable instructions stored in the memory 303, to implement a method provided in the following embodiment of this application.

Optionally, the computer-executable instructions in this embodiment of this application may also be referred to as application code. This is not specifically limited in this embodiment of this application.

During specific implementation, in an embodiment, the processor 301 may include one or more CPUs, such as a CPU 0 and a CPU 1 in FIG. 3.

During specific implementation, in an embodiment, the terminal may include a plurality of processors, for example, the processor 301 and a processor 307 that are shown in FIG. 3. Each of the processors may be a single-core (single-CPU) processor or a multi-core (multi-CPU) processor. Herein, the processor may be one or more devices, circuits, and/or processing cores configured to process data (for example, computer program instructions).

During specific implementation, in an embodiment, the terminal may further include an output device 305 and an input device 306. The output device 305 communicates with the processor 301, and may display information in a plurality of manners. For example, the output device 305 may be a liquid crystal display (LCD), a light emitting diode (LED) display device, a cathode ray tube (CRT) display device, or a projector. The input device 306 communicates with the processor 301, and may receive a user input in a plurality of manners. For example, the input device 306 may be a mouse, a keyboard, a touchscreen device, or a sensor device.

The following specifically describes, with reference to accompanying drawings of the specification, the technical solutions provided in the embodiments of this application.

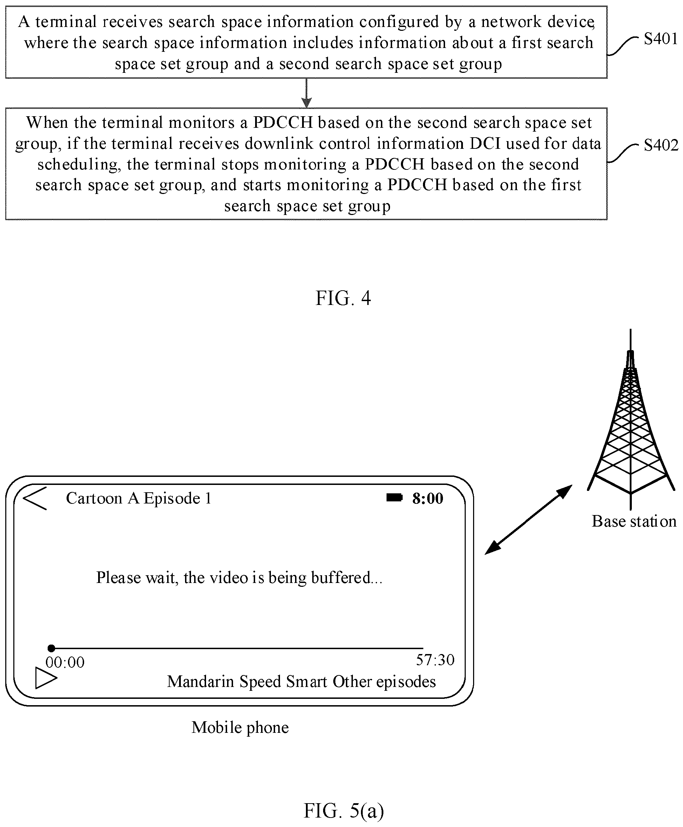

FIG. 4 is a schematic flowchart of steps of a PDCCH monitoring method according to an embodiment of this application. The method may be applied to the terminal 102 shown in FIG. 1, and the terminal 102 may be a terminal having the structure shown in FIG. 3. For ease of understanding, the following uses an example in which the terminal 102 is a mobile phone to describe the PDCCH monitoring method provided in this embodiment of this application. The method may include the following steps.

S401. The terminal receives search space information configured by a network device, where the search space information includes information about a first search space set group and a second search space set group.

In this embodiment of this application, the network device may be the base station 101 shown in FIG. 1.

In this embodiment of this application, the base station configures one or more search space set groups (SSSG) for the terminal. The terminal needs to monitor the one or more search space set groups, to find out whether the base station sends a PDCCH to the terminal.

Generally, each PDCCH includes one or more control channel elements (CCE). The number of CCEs included in one PDCCH is referred to as an aggregation level (AL). When one PDCCH includes one CCE, an aggregation level of the PDCCH is 1; when one PDCCH includes two CCEs, an aggregation level of the PDCCH is 2, and so on. There may be a plurality of aggregation levels, for example, 1, 2, 4, 8, and 16, five in total. When the terminal blindly detects a PDCCH in a specific time-frequency range, the time-frequency range may be referred to as a search space. The search space is usually periodic in time. Further, one search space set group may include one or more search spaces, which may be understood as follows: a whole including one or more search spaces is referred to as a search space set group.

When the base station configures the one or more search space set groups, related configuration information elements (IE) may include as follows:
searchSpacesToAddModList: A search space configuration is added to a list. One or more search spaces configured by the base station for the terminal are listed in the list.
searchSpacesToReleaseList: A search space is deleted from a list.

It should be noted that, in different documents, the search space may have different names. For example, in some other documents, a search space may also be referred to as a search space set (search space set).

In this embodiment of this application, configuration items of each search space may include a monitoring period and an offset value that are used when the search space is monitored, a symbol requiring monitoring in one slot, the number of times of blind detection that needs to be performed at each aggregation level, and the like. Related configuration IEs are shown as follows:
controlResourceSetld: It represents an index value of a control resource set (CORESET) associated with the search space. A frequency domain resource occupied by the search space, a duration duration of a symbol requiring monitoring, a manner of mapping a control channel element (CCE) to a resource element group (REG), a precoding granularity, a transmission configuration indicator (TCI) status configuration, and the like may be determined based on a configuration of the associated CORESET.
monitoringSlotPeriodicityAndOffset: It represents a monitoring period and an offset value of a slot requiring monitoring of the search space. A size of the period is represented by slx. For example, s11 represents a monitoring period of one slot, indicating that the terminal performs PDCCH monitoring once every one slot; and sl8 represents a monitoring period of eight slots, indicating that the terminal may perform PDCCH monitoring once every eight slots. After a period value is selected, a monitoring offset value further needs to be indicated. For example, after configuring sl8 (that is, the monitoring period is eight slots), the network device further needs to configure a slot in one period from which the search space starts to be monitored. Values 0 to 7 may be selected, respectively corresponding to slots in one period.
duration: It represents a time domain length that the search space lasts each time, measured in slots, that is, the number of slots requiring monitoring in one period.
monitoringSymbolsWithinSlot: It represents a start symbol requiring monitoring of the search space in a slot requiring monitoring, and a value is a sequence with a length of 14 bits, respectively indicating whether 14 symbols in one slot are start symbols requiring monitoring. For example, if the value is 10000001000000, start symbols requiring monitoring in one slot are a symbol 0 and a symbol 7. If a value of the duration of the CORESET associated with the search space is 3, all symbols requiring monitoring are a symbol 0, a symbol 1, a symbol 2, a symbol 7, a symbol 8, and a symbol 9.
nrofCandidates: It represents the number of PDCCH candidates requiring blind detection at each aggregation level in the search space.
aggregationLevelx: It represents the number of times that a PDCCH candidate whose aggregation level is x needs to be blindly detected. For example, if a value of aggregationLevel1 is n6, it indicates that a PDCCH candidate whose aggregation level is 1 needs to be blindly detected six times.
searchSpaceType: It represents a type of the search space. If a value of searchSpaceType is common, it indicates that the search space is a common search space. In this case, the following parameters may be configured: dci-Format0-0-AndFormat1-0, dci-Format2-0, dci-Format2-1, dci-Format2-2, and dci-Format2-3. When any one of the parameters is configured, it indicates that the terminal needs to monitor DCI in a corresponding format in the search space. For example, if dci-Format0-0-AndFormat1-0 is configured, it indicates that the terminal needs to monitor DCI format 0_0 and DCI format 1_0 in the search space. When dci-Format0-0-AndFormat1-0 is not configured, it indicates that the terminal does not need to monitor DCI format 0_0 or DCI format 1_0 in the search space. When the value of searchSpaceType is UE-specific, it indicates that the search space is a user equipment-specific search space. In this case, the following parameters may be configured: formats0-0-And-1-0 or formats0-1-And-1-1. When any one of the parameters is configured, it indicates that the terminal needs to monitor DCI in a corresponding format in the search space.

In a possible implementation of this embodiment of this application, the search space set groups configured by the base station for the terminal may include a first search space set group and a second search space set group. The terminal may obtain configuration information of the first search space set group and the second search space set group by receiving DCI sent by the base station. A monitoring period of a search space included in the first search space set group is less than or equal to a monitoring period of a search space included in the second search space set group.

S402. When the terminal monitors a PDCCH based on the second search space set group, if the terminal receives downlink control information DCI used for data scheduling, the terminal stops monitoring a PDCCH based on the second search space set group, and starts monitoring a PDCCH based on the first search space set group.

In this embodiment of this application, the terminal may switch between monitored search space set groups based on a specific data scheduling requirement.

In this embodiment of this application, each search space set group includes a plurality of search spaces, and a monitoring period of each search space is independently configured. The base station may configure monitoring periods of search spaces in each search space set group to a same size or different sizes.

In a possible implementation of this embodiment of this application, a monitoring period of each search space included in the first search space set group is less than a monitoring period of each search space included in the second search space set group.

For example, the first search space set group includes a first search space and a second search space, and the second search space set group includes a third search space and a fourth search space. Monitoring periods of the first search space and the second search space may be 3 slots and 4 slots respectively. Correspondingly, monitoring periods of the third search space and the fourth search space may be 6 slots and 8 slots respectively. In this case, the monitoring period of each search space in the first search space set group is less than the monitoring period of each search space in the second search space set group.

In another possible implementation of this embodiment of this application, in a plurality of search spaces included in the first search space set group, monitoring periods of some search spaces are less than the monitoring period of each search space in the second search space set group.

For example, monitoring periods of the first search space and the second search space may be 3 slots and 10 slots respectively. Correspondingly, monitoring periods of the third search space and the fourth search space may be 6 slots and 8 slots respectively. In this case, monitoring periods of some search space in the first search space set group are less than the monitoring periods of the search spaces in the second search space set group.

The monitoring period of each search space in the first search space set group and the monitoring period of each search space in the second search space set group may be configured to any size. A size of the monitoring period of each search space is not limited in this embodiment of this application.

Therefore, when the terminal monitors a PDCCH based on the second search space set group with a relatively large monitoring period, if the terminal receives DCI used for data scheduling, it indicates that data currently may need to be transmitted between the base station and the terminal. If the terminal continues to monitor a PDCCH by using the second search space set group with a relatively large monitoring period, a data transmission time may be prolonged, resulting in an excessively large data transmission delay. In this case, the terminal may stop monitoring a PDCCH based on the second search space set group, and start monitoring a PDCCH based on the first search space set group with a relatively small monitoring period, which helps to quickly complete data transmission and reduce a data transmission delay.

In this embodiment of this application, the DCI used for data scheduling may be DCI scrambled by using any one of the following radio network temporary identifiers (RNTI):
a cell radio network temporary identifier (C-RNTI), a modulation and coding scheme radio network temporary identifier (MCS-C-RNTI), or a configured scheduling radio network temporary identifier (CS-RNTI).

In another possible implementation of this embodiment of this application, when the terminal monitors a PDCCH based on the second search space set group, if DCI used for data scheduling is received, when starting monitoring a PDCCH based on the first search space set group, the terminal may alternatively not stop monitoring a PDCCH based on the second search space set group, but monitor a PDCCH based on both the first search space set group and the second search space set group.

In a possible implementation of this embodiment of this application, when the terminal monitors a PDCCH based on the first search space set group, if DCI used for data scheduling is received, the terminal may continue to monitor a PDCCH based on the first search space set group, without switching between the search space set groups.

In a possible implementation of this embodiment of this application, the terminal may be configured with a timer, and time of using different search space set groups is limited by using the timer. For example, when the timer is started, the terminal switches from the second search space set group to the first search space set group. After the timer expires, the terminal may switch from the first search space set group back to the second search space set group.

In this embodiment of this application, the terminal receives the information about the one or more search space set groups configured by the base station. Because monitoring periods of search spaces included in different search space set groups may be different, when the terminal monitors a PDCCH based on the second search space set group, if the terminal receives the DCI used for data scheduling, the terminal may start monitoring a PDCCH based on the first search space set group. When the monitoring period of each search space in the first search space set group is relatively small, for example, monitoring periods of all or some search spaces in the first search space set group are less than the monitoring period of each search space in the second search space set group, when the DCI used for data scheduling is received, the switching of the terminal from the second search space set group with a relatively large monitoring period to the first search space set group with a relatively small monitoring period helps to quickly complete data transmission and reduce a data transmission delay. The terminal selects, based on whether data needs to be scheduled, a search space set group with a proper monitoring period to monitor a PDCCH. When there is no data transmission, the terminal may monitor a PDCCH based on the second search space set group with a relatively large monitoring period, to reduce power consumption of the terminal and prolong a standby time of the terminal.

In this embodiment of this application, when data arrives, the terminal may switch between the search space set groups, for example, switch from the second search space set group to the first search space set group. If the monitoring period of each search space in the second search space set group is relatively large, after the terminal switches to the first search space set group with a relatively small monitoring period, data can be quickly scheduled.

In this embodiment of this application, one of signs of data arrival is that the terminal receives preset DCI (scheduling DCI, that is, DCI for scheduling data). The scheduling DCI includes DCI scrambled by using a C-RNTI, an MCS-C-RNTI, or a CS-RNTI.

Generally, the terminal may monitor, in a UESS, the DCI scrambled by using the C-RNTI, the MCS-C-RNTI, or the CS-RNTI. Therefore, in a possible implementation of this embodiment of this application, the DCI used for data scheduling may be the DCI scrambled by using the C-RNTI, the MCS-C-RNTI, or the CS-RNTI in the UESS.

Because a common search space CSS does not belong to any search space set group, the terminal needs to keep monitoring a PDCCH in the CSS.

Therefore, in another possible implementation of this embodiment of this application, the first search space set group and the second search space set group are directed only at the user equipment-specific search space UESS, while the common search space CSS does not belong to any search space set group, and the terminal needs to keep monitoring a PDCCH in the CSS.

In this embodiment of this application, the common search space CSS may be classified into the following types:
(1) Type 0 CSS: It is used to transmit DCI for scheduling a SIB1, and configured by using a MIB or configured by using PDCCH-ConfigCommon. Monitored DCI is scrambled by using an SI-RNTI.
(2) Type 0A CSS: It is used to transmit DCI for scheduling OSI (that is, another SIB other than the SIB1, such as a SIB2/SIB3), and configured by using PDCCH-ConfigCommon. Monitored DCI is scrambled by using an SI-RNTI.
(3) Type 1 CSS: It is used to transmit DCI related to a random access procedure, and configured by using a PDCCH-ConfigCommon. Monitored DCI is scrambled by using an RA-RNTI, a MsgB-RNTI, or a TC-RNTI.
(4) Type 2 CSS: It is used to transmit DCI for paging (paging), and configured by using PDCCH-ConfigCommon. Monitored DCI is scrambled by using a P-RNTI.
(5) Type 3 CSS: It is used to transmit DCI of another type other than the foregoing types, and configured by using PDCCH-Config. Monitored DCI may be scrambled by using any one of the following RNTIs: an INT-RNTI, an SFI-RNTI, a TPC-PUSCH-RNTI, a TPC-PUCCH-RNTI, a TPC-SRS-RNTI, a CI-RNTI, a PS-RNTI, a C-RNTI, an MCS-C-RNTI, or a CS-RNTI(s).

Therefore, in another possible implementation of this embodiment of this application, the DCI used for data scheduling may alternatively be DCI scrambled by using a C-RNTI, an MCS-C-RNTI, or a CS-RNTI in the type 3 common search space CSS type 3. In this case, the first search space set group and the second search space set group are directed only at the user equipment-specific search space UESS and the type 3 CSS, while a CSS of another type does not belong to any search space set group, and the terminal needs to keep monitoring a PDCCH in the CSS of another type (for example, the type 0 CSS, the type 0A CSS, the type 1 CSS, and the type 2 CSS).

In this embodiment of this application, the terminal may determine, by determining whether received DCI is DCI used for data scheduling, whether a downlink service currently arrives. If a downlink service arrives, the terminal may switch between the search space set groups, and start monitoring a PDCCH based on the first search space set group. If monitoring periods of all or some search spaces in the first search space set group are less than the monitoring period of each search space in the second search space set group, when the terminal monitors a PDCCH based on the first search space set group with a relatively small monitoring period, downlink data can be quickly scheduled, thereby reducing a user waiting time.

Alternatively, in another possible implementation of this embodiment of this application, the first search space set group and the second search space set group include any types of search spaces. For example, the first search space set group and the second search space set group may include a UESS and a CSS. In this case, when the terminal monitors a PDCCH based on the first search space set group, even common control information may be detected by using a relatively large period, thereby further reducing power consumption.

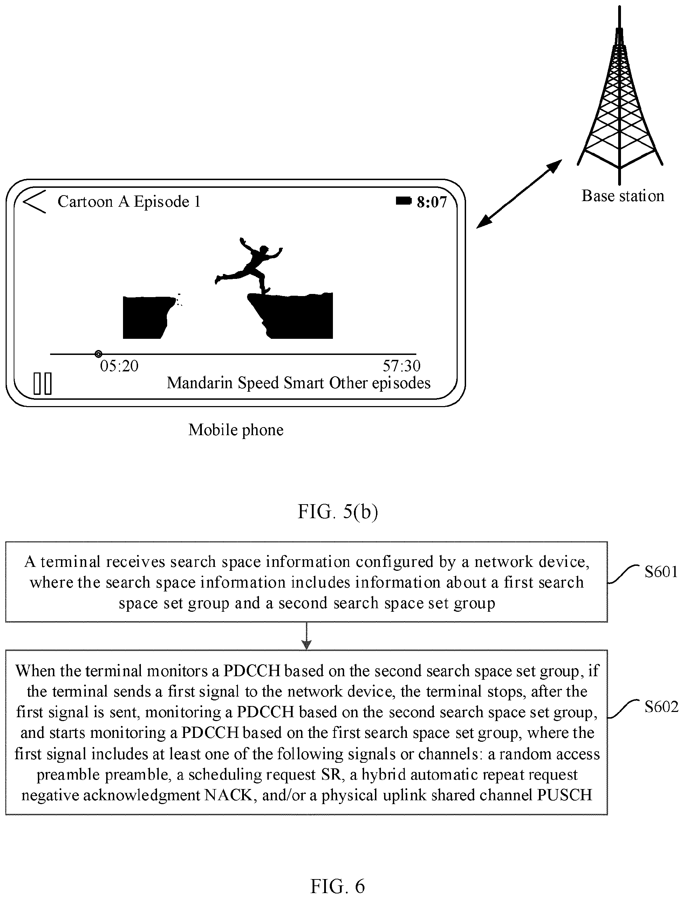

In an example of this embodiment of this application, in the scenario shown in FIG. 1, a user may watch a video by using the terminal in FIG. 1. Generally, before the video is played, to ensure that the video is played smoothly, the terminal needs to buffer data for a period of time in advance. FIG. 5(a) is a schematic diagram of an interface of a terminal during video buffering. During buffering, because a large amount of data needs to be transmitted, the terminal had better to monitor a PDCCH by using the first search space set group with a relatively small monitoring period, so that data transmission can be quickly completed to reduce a waiting time for data buffering. After the video buffering is completed, for example, in a video playing process shown in FIG. 5(b), when there is no data transmission temporarily, the terminal had better to monitor a PDCCH by using the second search space set group with a relatively large monitoring period, to avoid power waste. When the terminal enters a state of "starting buffering data" from a state of "not buffering data", that is, when the terminal needs to switch from the second search space set group with a relatively large monitoring period to the first search space set group with a relatively small monitoring period, according to the method provided in this embodiment of this application, switching between the search space set groups may be implemented by determining whether the terminal receives DCI used for data scheduling.

FIG. 6 is a schematic flowchart of steps of another PDCCH monitoring method according to an embodiment of this application. The method may be applied to the terminal 102 shown in FIG. 1, and the terminal 102 may be a terminal having the structure shown in FIG. 3. The method may include the following steps.

S601. The terminal receives search space information configured by a network device, where the search space information includes information about a first search space set group and a second search space set group.

Because S601 is similar to S401 in the foregoing embodiment, reference may be made to each other, and details are not described herein again.

S602. When the terminal monitors a PDCCH based on the second search space set group, if the terminal sends a first signal to the network device, the terminal stops, after the first signal is sent, monitoring a PDCCH based on the second search space set group, and starts monitoring a PDCCH based on the first search space set group, where the first signal includes at least one of the following signals or channels: a random access preamble, a scheduling request (SR), a hybrid automatic repeat request negative acknowledgment (NACK), and/or a physical uplink shared channel (PUSCH).

In this embodiment of this application, the network device may be a base station, and the first signal may be a signal sent by the terminal to the base station. It should be noted that, the first signal is merely a name for a signal of a specific type for ease of description, and the first signal may include one or more types of signals that meet a corresponding condition. After sending the first signal, the terminal may switch a current search space set group for monitoring a PDCCH.

In a possible implementation of this embodiment of this application, the first signal may be a random access preamble.

Generally, when the terminal is in an abnormal state, for example, when the terminal is in a state such as a radio link failure, a beam failure, or uplink out-of-synchronization, the terminal initiates a random access procedure so that the terminal recovers to a normal state. In this case, to recover to normal as quickly as possible, the terminal may switch between the search space set groups for monitoring a PDCCH.

When performing an operation to recover to normal, the terminal first needs to send a preamble or a physical random access channel (PRACH) to the base station. Therefore, whether the terminal sends a preamble or a PRACH to the base station may be used as a determining condition. After the terminal sends a preamble or a PRACH to the base station, the terminal may stop monitoring a PDCCH based on the second search space set group, and start monitoring a PDCCH based on the first search space set group.

Certainly, after starting monitoring a PDCCH based on the first search space set group, the terminal may alternatively not stop monitoring a PDCCH based on the second search space set group, but monitor a PDCCH based on both the first search space set group and the second search space set group.

Alternatively, if the terminal is monitoring a PDCCH based on the first search space set group when sending a preamble or a PRACH to the base station, after the terminal sends the preamble or the PRACH to the base station, the terminal may continue to monitor a PDCCH based on the first search space set group.

In a possible implementation of this embodiment of this application, monitoring periods of search spaces in the first search space set group may be less than monitoring periods of search spaces in the second search space set group. For example, monitoring periods of all or some search spaces in the first search space set group are less than the monitoring periods of the search spaces in the second search space set group. Therefore, after the terminal switches from the second search space set group with a relatively large monitoring period to the first search space set group with a relatively small monitoring period, and starts monitoring a PDCCH based on the first search space set group, the terminal can quickly recover to the normal state.

In a possible implementation of this embodiment of this application, a monitoring period of each search space in the first search space set group may be greater than a monitoring period of each search space in the second search space set group. In another possible implementation, the monitoring period of each search space in the first search space set group and the monitoring period of each search space in the second search space set group may be the same. In this embodiment of this application, specific periods of the monitoring period of each search space in the first search space set group and the monitoring period of each search space in the second search space set group are not limited. It may be understood that these periods may be configured by the base station. In a possible implementation of this embodiment of this application, specific time for starting monitoring a PDCCH based on the first search space set group after the terminal sends the preamble or the PRACH to the base station may be a preset number of slots after the terminal sends the preamble or the PRACH. The preset number of slots may be preconfigured based on an actual need. A specific value of the preset number of slots is not limited in this embodiment of this application.

For example, the preset number may be one. That is, the terminal stops monitoring a PDCCH based on the second search space set group, and starts monitoring a PDCCH based on the first search space set group in a next slot after the preamble or the PRACH is sent.

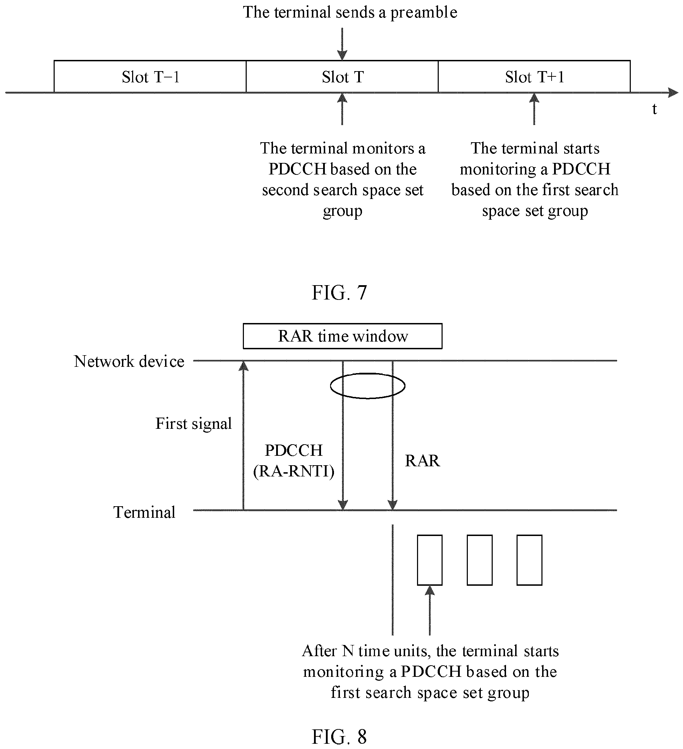

FIG. 7 is a schematic diagram of a time relationship of switching of a terminal between search space set groups according to an embodiment of this application. In FIG. 7, a horizontal coordinate t represents a time sequence relationship between slots, and a slot next to a slot T is a slot T+1. If the terminal sends a preamble to the base station in the slot T, the terminal may start monitoring a PDCCH based on the first search space set group in the slot T+1.

In another possible implementation of this embodiment of this application, the specific time for starting monitoring a PDCCH based on the first search space set group after the terminal sends the preamble or the PRACH to the base station may alternatively mean that the terminal receives DCI scrambled by using a random access radio network temporary identifier (RA-RNTI), and the DCI is used for contention-free access.

Generally, after the terminal sends the preamble or the PRACH to the base station, the terminal receives a random access response (RAR) sent by the base station. The RAR is scheduled by using the DCI scrambled by using the RA-RNTI. Therefore, in a contention-free access case, after the terminal receives the DCI scrambled by using the RA-RNTI, it indicates that access of the terminal succeeds. Then, the terminal usually starts data scheduling. Therefore, when the terminal receives the DCI scrambled by using the RA-RNTI, if the DCI scrambled by using the RA-RNTI is used for contention-free access, the terminal may stop monitoring a PDCCH based on the second search space set group, and start monitoring a PDCCH based on the first search space set group. In a possible implementation of this embodiment of this application, when the terminal starts monitoring a PDCCH based on the first search space set group, the terminal may alternatively not stop monitoring a PDCCH based on the second search space set group. That is, the terminal may monitor a PDCCH based on both the first search space set group and the second search space set group.

In this embodiment of this application, when the terminal is in an abnormal state, the terminal may initiate a random access procedure so that the terminal recovers to normal as soon as possible. In this case, it may be determined whether the terminal sends a preamble or a PRACH, so that in a slot next to that of sending the preamble or the PRACH, the terminal starts monitoring a PDCCH based on the first search space set group with a relatively small monitoring period, thereby helping the terminal quickly recover to normal.

Considering that a search space for transmitting the DCI scrambled by using the RA-RNTI is a common search space, the DCI that is scrambled by using the RA-RNTI, sent by the base station, and received by the terminal may not indicate successful access of a random access channel (RACH) procedure. For example, a PDSCH scheduled by using an RA-RNTI may carry RARs of a plurality of terminals, and a PDSCH scheduled by using a PDCCH currently received by the terminal may not include an RAR of the terminal. In this case, for the terminal, the RAR actually fails to be received, and the RACH also fails.

Therefore, in a possible implementation of this embodiment of this application, for a contention-free-based RACH procedure initiated in an RRC connected state, the terminal may start switching between the search space set groups after receiving an RAR (carried on a PDSCH scheduled by using DCI scrambled by using an RA-RNTI). Considering time for parsing the RAR, the terminal may start switching between the search space set groups after a preset number of time units after the RAR is received. For example, if the terminal currently monitors a PDCCH based on the second search space set group, after a preset number of time units after the terminal sends a preamble to the base station and receives an RAR sent by the base station, the terminal switches between the search space set groups and starts monitoring a PDCCH based on the first search space set group. Monitoring periods of some or all search spaces in the second search space set group are greater than monitoring periods of some or all search spaces in the first search space set group. A specific number of the time units may be preset based on an actual need, and the number of time units is not limited in this embodiment of this application. The time unit may include an orthogonal frequency division multiplexing (OFDM) symbol, a slot, a millisecond, or the like.

In another possible implementation of this embodiment of this application, that the terminal starts switching between the search space set groups after a preset number of time units after the RAR is received may mean that the terminal starts monitoring a PDCCH based on the first search space set group in a first slot after the preset number of time units after the RAR is received.

FIG. 8 is a schematic diagram of a contention-free-based random access procedure according to an embodiment of this application. In FIG. 8, when initiating a random access procedure, the terminal sends a first signal to the base station. The first signal may be a preamble or a PRACH. After receiving the first signal, the base station returns an RAR to the terminal. Then, the terminal may switch between the search space set groups after N time units after the RAR is received, for example, switch from the second search space set group to the first search space set group, and start monitoring a PDCCH based on the first search space set group. In the N time units, the terminal may parse the received RAR to ensure that switching between the search space set groups is performed after the RAR is received accurately.

Generally, in a contention-based RACH procedure, after the terminal sends a preamble to the base station, the base station temporarily cannot distinguish which terminal sends a received preamble. If the terminal switches between the search space set groups after sending the preamble, because the base station cannot distinguish the terminal that sends the preamble, in this case, the base station does not synchronously switch between the search space set groups, which easily causes a switching occasion mismatch between the terminal and the base station. When the terminal starts monitoring a PDCCH based on a switched-to search space set group, unnecessary power waste is caused.

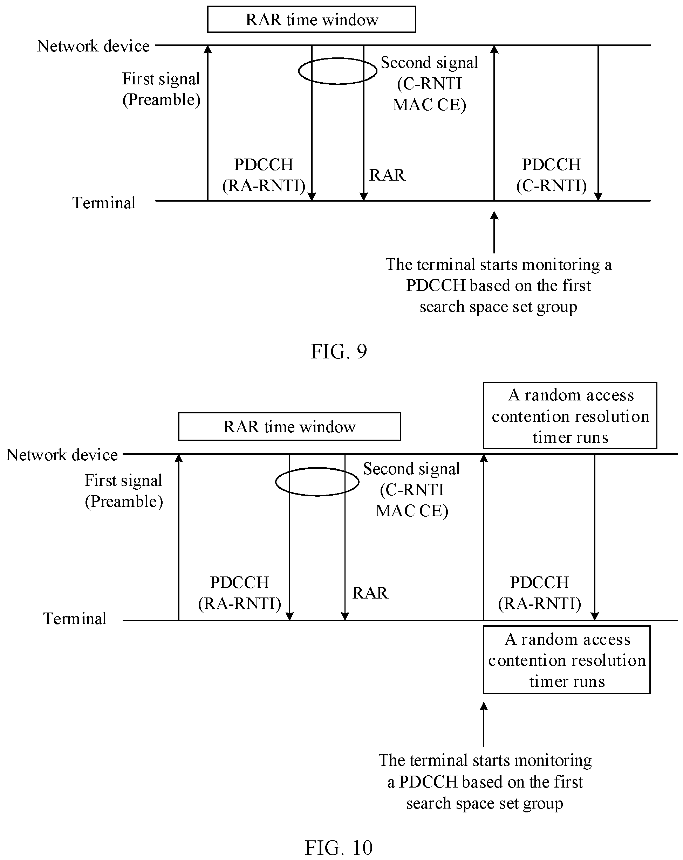

FIG. 9 is a schematic diagram of a contention-based random access procedure according to an embodiment of this application. In a contention-based RACH procedure, the terminal sends a first signal to the base station. The first signal may be a preamble or a PRACH. After receiving the first signal, the base station returns an RAR to the terminal. Then, the terminal sends a second signal to the base station. After receiving the second signal sent by the terminal, the base station starts a random access contention resolution timer (ra-ContentionResolutionTimer). If the second signal sent by the terminal includes a C-RNTI MAC CE, during running of the random access contention resolution timer, the terminal monitors a PDCCH scrambled by using a C-RNTI. If the terminal receives the PDCCH scrambled by using the C-RNTI, it indicates that contention resolution of the terminal succeeds. In this case, the corresponding RACH procedure is successfully completed.

The PDCCH scrambled by using the C-RNTI is monitored in a search space whose type is a USS or a type 3 CSS, and the USS and the type 3 CSS are in groups, for example, the first search space set group or the second search space set group. Therefore, in another possible implementation of this embodiment of this application, in a contention-based random access (CRBA) procedure initiated in the RRC connected state, the terminal may switch between the search space set groups after sending a second signal including a C-RNTI MAC CE to the base station, for example, switch from the second search space set group to the first search space set group, and start monitoring a PDCCH based on the first search space set group.

Based on FIG. 9, FIG. 10 is a schematic diagram of a process of starting a random access contention resolution timer according to an embodiment of this application. When the terminal sends the second signal to the base station, the terminal and the base station each maintains a random access contention resolution timer. Therefore, when the random access contention resolution timer is started, the terminal may switch between the search space set groups, and switch from the second search space set group to the first search space set group. During running of the random access contention resolution timer, the terminal monitors a PDCCH based on the first search space set group.

In the contention-based random access procedure, the base station cannot distinguish which terminal sends a preamble. Therefore, after receiving the preamble, the base station does not immediately switch between the search space set groups. If the terminal switches between the search space set groups prematurely, a switching occasion mismatch between the terminal and the base station is caused, unnecessary PDCCH monitoring is caused, and power consumption of the terminal is increased. Therefore, in this embodiment of the present application, the terminal may switch between the search space set groups after sending the second signal including the C-RNTI MAC CE, because in this case, the base station already can identify which terminal currently initiates the random access procedure, and the base station and the terminal can complete switching between the search space set groups synchronously, thereby ensuring a switching occasion match between the two, and helping to reduce power consumption of the terminal.

In S401 and S402 of the foregoing embodiment, when the terminal receives DCI representing arrival of a downlink service, the terminal may start monitoring a PDCCH based on the first search space set group with a relatively small monitoring period. Similarly, when an uplink service arrives, data also needs to be transmitted between the terminal and the base station.

Therefore, in another possible implementation of this embodiment of this application, the first signal may alternatively be a scheduling request SR.

Generally, when the terminal has data that needs to be transmitted to the base station, that is, when the terminal has uplink data to be transmitted, the terminal may first send an SR to the base station. After receiving the SR, the base station sends DCI to the terminal to schedule PUSCH transmission. In this case, to ensure that the uplink data can be completely transmitted as quickly as possible, after sending the SR, the terminal may monitor a PDCCH based on the first search space set group with a relatively small monitoring period. Specifically, if the terminal is monitoring a PDCCH based on the second search space set group when sending the SR, after sending the SR, the terminal may stop monitoring a PDCCH based on the second search space set group, and start monitoring a PDCCH based on the first search space set group. Alternatively, after sending the SR, the terminal may start monitoring a PDCCH based on the first search space set group and the second search space set group. If the terminal is monitoring a PDCCH based on the first search space set group when sending the SR, the terminal may continue to monitor a PDCCH based on the first search space set group after sending the SR.

In this embodiment of this application, when the terminal sends a signal such as a preamble or an SR to the base station, it may indicate that the terminal currently needs to quickly access the base station to recover to a normal state or the terminal has uplink data arriving. Therefore, after sending the preamble or the SR, the terminal may start monitoring a PDCCH based on the first search space set group with a relatively small monitoring period, to implement fast service recovery or fast scheduling of the data.

In this embodiment of this application, for a semi-persistent scheduling scenario, for example, once downlink semi-persistent scheduling (DL SPS), or a configured uplink (UL) grant, such as a configured uplink grant type 1 or type 2 (configured UL grant Type 1 or Type 2), is configured or activated, the terminal may receive a PDSCH or send a PUSCH based on a specific period without a dynamic scheduling grant. For example, for the DL SPS or the configured UL grant type 2, related parameters may be configured by using RRC signaling. If the terminal receives DCI (the DCI is transmitted by a PDCCH scrambled by using a CS-RNTI) that activates the DL SPS or the configured UL grant type 2, the terminal may start periodically receiving a PDSCH of the DL SPS or periodically sending a PUSCH. It can be learned that after the base station sends the activation DCI (the activation DCI indicates a time-frequency resource of a first PDSCH/PUSCH), no new scheduling DCI needs to be sent, and the terminal may send or receive data on the semi-persistently configured resource. The base station may release the semi-persistent resource of the DL SPS or the configured UL grant type 2 by sending DCI. After receiving the release DCI (the DCI is also transmitted by the PDCCH scrambled by using the CS-RNTI), the terminal may stop receiving a PDSCH of the DL SPS or stop sending a semi-persistent PUSCH. For the configured UL grant type 1, activation or release of a semi-persistent PUSCH resource is configured by using RRC signaling.

During semi-persistent scheduling, because the base station does not need to send dynamic scheduling DCI for a semi-persistent PDSCH/PUSCH resource, in a period of time, the terminal may detect no DCI in a search space set group with a relatively small monitoring period, and therefore switch to another search space set group with a relatively large monitoring period to monitor a PDCCH. For example, if the terminal detects no DCI in a period of time, InactivityTimer is not restarted, and after InactivityTimer expires, the terminal switches from the first search space set group to the second search space set group.

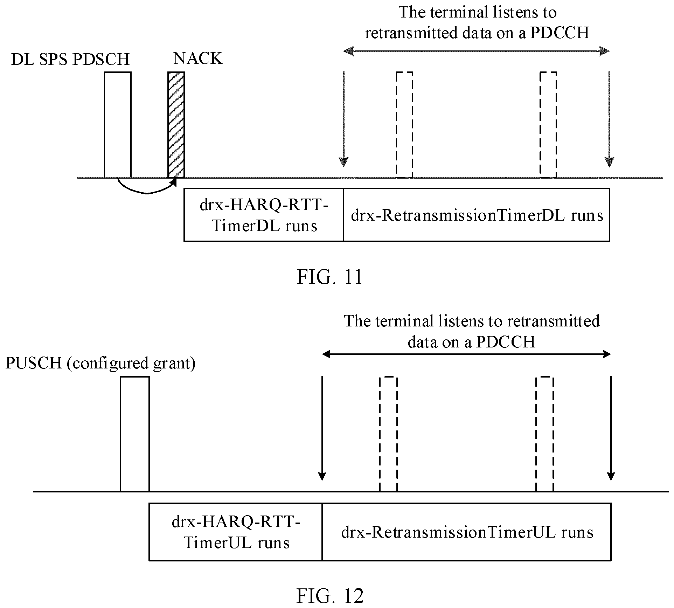

However, during semi-persistent scheduling, a discontinuous reception (DRX) retransmission timer may be triggered to be started. When the DRX retransmission timer runs, there may be retransmitted data, and the terminal needs to monitor a PDCCH scrambled by using a CS-RNTI. FIG. 11 is a schematic diagram of a process of starting a discontinuous reception downlink retransmission timer (drx-RetransmissionTimerDL) according to an embodiment of this application. In FIG. 11, for DL SPS, if the terminal feeds back a hybrid automatic repeat request (HARQ) negative acknowledgment NACK in a hybrid automatic repeat request feedback, it indicates that the terminal fails to correctly decode a PDSCH. Then, after a corresponding discontinuous reception downlink HARQ round-trip time timer (drx-HARQ-RTT-TimerDL) expires, the terminal starts drx-RetransmissionTimerDL. During running of drx-RetransmissionTimerDL, the terminal may monitor a PDCCH to expect to receive retransmitted data.

FIG. 12 is a schematic diagram of another process of starting a discontinuous reception uplink retransmission timer according to an embodiment of this application. In an uplink data transmission process shown in FIG. 12, after sending a PUSCH, the terminal starts drx-HARQ-RTT-TimerUL. When drx-HARQ-RTT-TimerUL expires, the terminal starts drx-RetransmissionTimerUL. During running of drx-RetransmissionTimerUL, the terminal monitors possible uplink retransmission scheduling.

Then, when a corresponding retransmission timer, for example, drx-RetransmissionTimerDL or the discontinuous reception uplink retransmission timer (drx-RetransmissionTimerUL), runs, if the terminal monitors a search space set group with a relatively large monitoring period, such as the second search space set group, a retransmission scheduling delay of the terminal may be increased.

Therefore, in this embodiment of this application, when the discontinuous reception retransmission timer runs, the terminal may monitor a PDCCH based on the first search space set group with a relatively small monitoring period, to reduce a retransmission delay and reduce a data delay. It should be noted that the discontinuous reception retransmission timer includes the discontinuous reception downlink retransmission timer (drx-RetransmissionTimerDL) or the discontinuous reception uplink retransmission timer (drx-RetransmissionTimerUL).

In this embodiment of this application, if the terminal detects no DCI in the first search space set group during running of the discontinuous reception retransmission timer, after the discontinuous reception retransmission timer expires, the terminal may switch between the search space set groups, switch from the first search space set group with a relatively small monitoring period to the second search space set group with a relatively large monitoring period, and monitor a PDCCH based on the second search space set group, to reduce power consumption of the terminal.

In a possible implementation of this embodiment of this application, when configuring the search space set groups for the terminal, the base station may introduce a timer (InactivityTimer). When the timer runs, the terminal may monitor a PDCCH based on a search space set group with a relatively small monitoring period, for example, the first search space set group. After the timer expires, the terminal may switch to a search space set group with a relatively large monitoring period, for example, the second search space set group. The timer may be referred to as a first search space set group timer.

A possible condition for triggering the first search space set group timer to be started or restarted is as follows: the terminal detects any DCI format in a search space of the first search space set group or the second search space set group.

In a possible implementation of this embodiment of this application, the terminal may start or restart the first search space set group timer when any one of the following conditions is met:
when ra-ContentionResolutionTimer is started, after the terminal successfully receives an RAR sent by the base station, or when the discontinuous reception retransmission timer is started.

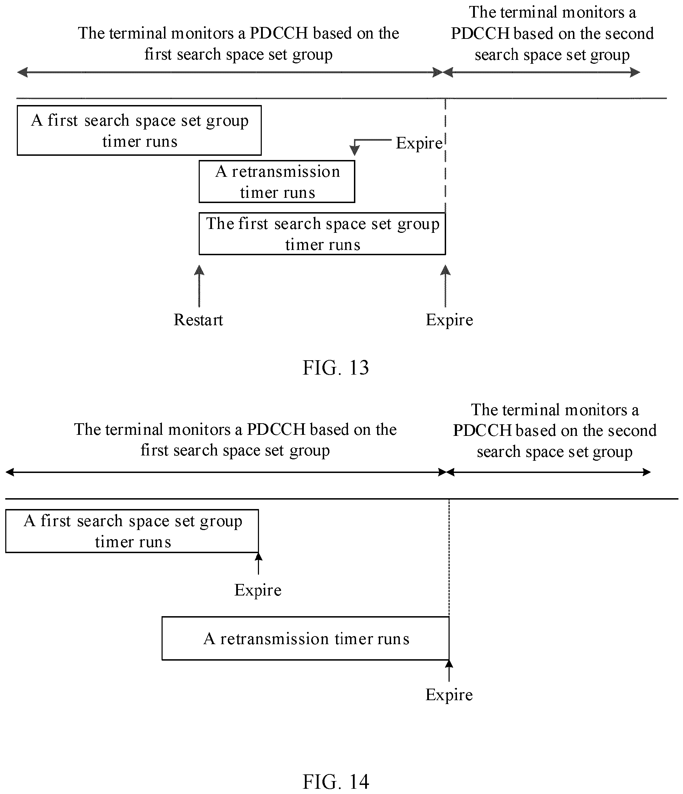

For example, the discontinuous reception uplink retransmission timer (drx-RetransmissionTimerUL) is used as an example. FIG. 13 is a schematic diagram of a process of starting or restarting a first search space set group timer according to an embodiment of this application. In FIG. 13, when the first search space set group timer is started, the terminal monitors a PDCCH based on the first search space set group. During running of the first search space set group timer, when the discontinuous reception uplink retransmission timer is started, the first search space set group timer is restarted, and the terminal continues to monitor a PDCCH based on the first search space set group. After the discontinuous reception uplink retransmission timer expires, if the first search space set group timer is still running, the terminal continues to monitor a PDCCH based on the first search space set group until the first search space set group timer expires, and the terminal starts monitoring a PDCCH based on the second search space set group.

In another possible implementation of this embodiment of this application, the first search space set group timer may run based on a specified start or restart mechanism. However, when any one of the following conditions is met, after the first search space set group timer expires, the terminal delays switching of the first search space set group. That is, when any one of the following conditions is met, after the first search space set group timer expires, the terminal still monitors a PDCCH based on the first search space set group without switching to the second search space set group:
Condition 1: When ra-ContentionResolutionTimer runs, the first search space set group timer expires.
   During running of ra-ContentionResolutionTimer, the terminal monitors a PDCCH based on the first search space set group regardless of whether the first search space set group timer expires. During running of ra-ContentionResolutionTimer, if the terminal receives no PDCCH scrambled by using a C-RNTI, after ra-ContentionResolutionTimer expires, the terminal switches to the second search space set group. Otherwise, the terminal starts or restarts the first search space set group timer when detecting a PDCCH scrambled by using a C-RNTI.
Condition 2: When the discontinuous reception retransmission timer runs, the first search space set group timer expires.

During running of the discontinuous reception retransmission timer, the terminal monitors a PDCCH based on the first search space set group regardless of whether the first search space set group timer expires. During the running of the discontinuous reception retransmission timer, if the terminal receives no PDCCH for scheduling data retransmission, and detects no other DCI formats in search spaces of the first search space set group, after the discontinuous reception retransmission timer expires, the terminal switches to the second search space set group. Otherwise, the terminal starts or restarts the first search space set group timer when a PDCCH for scheduling data retransmission is detected (or any DCI format is detected) in search spaces of the first search space set group.

For example, the discontinuous reception uplink retransmission timer (drx-RetransmissionTimerUL) is used as an example. FIG. 14 is a schematic diagram of another process of starting or restarting a first search space set group timer according to an embodiment of this application. In FIG. 14, when the first search space set group timer is started, the terminal monitors a PDCCH based on the first search space set group. During running of the first search space set group timer, when the discontinuous reception uplink retransmission timer is started, the terminal continues to monitor a PDCCH based on the first search space set group. After the first search space set group timer expires, if the discontinuous reception uplink retransmission timer is still running, the terminal continues to monitor a PDCCH based on the first search space set group. If the discontinuous reception uplink retransmission timer is not restarted during running of the discontinuous reception retransmission timer, after the discontinuous reception retransmission timer expires, the terminal starts monitoring a PDCCH based on the second search space set group.

Condition 3: After the terminal successfully receives an RAR sent by the base station, before newly transmitted data is received, the first search space set group timer expires.

In this case, after the first search space set group timer expires, the terminal does not perform switching between the search space set groups, but still monitors a PDCCH based on the first search space set group. After receiving a PDCCH indicating newly transmitted data, the terminal starts or restarts the first search space set group timer.

In a possible implementation of this embodiment of this application, the first search space set group and the second search space set group in S401 and S601 are configured in a nested relationship.

During specific implementation, when configuring a first configuration parameter of the first search space set group and a second configuration parameter of the second search space set group for the terminal, the base station may limit values of the first configuration parameter and the second configuration parameter, so that a parameter related to time domain monitoring in the second configuration parameter is a subset of a parameter related to time domain monitoring in the first configuration parameter; and/or a parameter related to frequency domain monitoring in the second configuration parameter is a subset of a parameter related to frequency domain monitoring in the first configuration parameter. Alternatively, it may be described as follows: the base station may limit values of the first configuration parameter and the second configuration parameter, so that a time domain monitoring location of the second search space set group is a subset of a time domain monitoring location of the first search space set group; and/or a frequency domain monitoring location of the second search space set group is a subset of a frequency domain monitoring location of the first search space set group.

In a possible implementation of this embodiment of this application, the parameter related to time domain monitoring in the first configuration parameter includes a monitoring period of the first search space set group, and the parameter related to time domain monitoring in the second configuration parameter includes a monitoring period of the second search space set group. Therefore, that a parameter related to time domain monitoring in the second configuration parameter is a subset of a parameter related to time domain monitoring in the first configuration parameter may be: the monitoring period of the second search space set group is an integer multiple of the monitoring period of the first search space set group.

That the monitoring period of the second search space set group is an integer multiple of the monitoring period of the first search space set group may be understood as follows: a monitoring period of a search space included in the second search space set group is an integer multiple of a monitoring period of a search space included in the first search space set group.

In a possible implementation of this embodiment of this application, a monitoring period of each search space included in the second search space set group is an integer multiple of a monitoring period of a search space included in the first search space set group.

For example, the first search space set group includes a first search space and a second search space, and the second search space set group includes a third search space, a fourth search space, and a fifth search space. Monitoring periods of the first search space and the second search space may be 3 slots and 4 slots respectively. Correspondingly, monitoring periods of the third search space, the fourth search space, and the fifth search space may be 6 slots, 9 slots, and 12 slots respectively. In this case, a monitoring period of each search space (the third search space, the fourth search space, and the fifth search space) included in the second search space set group is an integer multiple of a monitoring period of a search space (the first search space) included in the first search space set group.

In another possible implementation of this embodiment of this application, in a plurality of search spaces included in the second search space set group, monitoring periods of some search spaces are integer multiples of a monitoring period of a search space in the first search space set group.

For example, the first search space set group includes a first search space and a second search space, and the second search space set group includes a third search space, a fourth search space, and a fifth search space. Monitoring periods of the first search space and the second search space may be 3 slots and 4 slots respectively. Correspondingly, monitoring periods of the third search space, the fourth search space, and the fifth search space may be 6 slots, 9 slots, and 10 slots respectively. In this case, monitoring periods of some search spaces (the third search space and the fourth search space) included in the second search space set group are integer multiples of a monitoring period of a search space (the first search space) included in the first search space set group. A monitoring period and an offset value of a slot requiring monitoring (monitoringSlotPeriodicityAndOffset) are used as an example. A monitoring period of a search space included in the second search space set group may be configured to 5 slots, and a monitoring period of a search space included in the first search space set group may be configured to 1 slot. Alternatively, a monitoring period of a search space included in the second search space set group may be configured to 6 slots, and a monitoring period of a search space included in the first search space set group may be configured to 2 slots. In this way, the monitoring period of the second search space set group is configured to an integer multiple of the monitoring period of the first search space set group, so that the following objective can be achieved: a monitoring slot set obtained by the terminal based on the monitoring period of the first search space set group belongs to a subset of a monitoring slot set obtained based on the monitoring period of the second search space set group.

In this way, when slots of the base station and the terminal are not aligned due to some errors (for example, in S502 of the foregoing embodiment, after sending the SR, the terminal starts monitoring a PDCCH based on the first search space set group, but because the base station may not successfully receive the SR sent by the terminal, the base station may consider that the terminal still monitors a PDCCH by using the second search space set group), scheduling information sent by the terminal may be received by the terminal.

In another possible implementation of this embodiment of this application, the parameter related to time domain monitoring in the first configuration parameter includes a monitoring symbol set of the first search space set group, and the parameter related to time domain monitoring in the second configuration parameter includes a monitoring symbol set of the second search space set group. Therefore, that a parameter related to time domain monitoring in the second configuration parameter is a subset of a parameter related to time domain monitoring in the first configuration parameter may be: the monitoring symbol set of the second search space set group is a subset of the monitoring symbol set of the first search space set group.

That the monitoring symbol set of the second search space set group is a subset of the monitoring symbol set of the first search space set group may be understood as follows: a monitoring symbol set of a search space included in the second search space set group is a subset of a monitoring symbol set of a search space included in the first search space set group.

In this embodiment of this application, a monitoring symbol set of each search space may be determined based on duration and monitoringSymbolsWithinSlot of a CORESET associated with the search space. Therefore, when configuring parameters for the first search space set group and the second search space set group, on the basis of configuring a monitoring period of a search space included in the second search space set group to an integer multiple of a monitoring period of a search space included in the first search space set group, the base station may configure a symbol set that is determined based on duration and monitoringSymbolsWithinSlot of a CORESET and that requires monitoring in the search space included in the second search space set group to a subset of a symbol set that is determined based on duration and monitoringSymbolsWithinSlot of a CORESET and that requires monitoring in the search space included in the first search space set group.

In a possible implementation of this embodiment of this application, the parameter related to frequency domain monitoring in the first configuration parameter includes a frequency domain monitoring location set of the first search space set group, and the parameter related to frequency domain monitoring in the second configuration parameter includes a frequency domain monitoring location set of the second search space set group. Therefore, that a parameter related to frequency domain monitoring in the second configuration parameter is a subset of a parameter related to frequency domain monitoring in the first configuration parameter may be: the frequency domain monitoring location set of the second search space set group is a subset of the frequency domain monitoring location set of the first search space set group.

That the frequency domain monitoring location set of the second search space set group is a subset of the frequency domain monitoring location set of the first search space set group may be understood as follows: a frequency domain monitoring location set of a search space included in the second search space set group is a subset of a frequency domain monitoring location set of a search space included in the first search space set group.

In this embodiment of this application, a frequency domain monitoring location set of each search space set group may be the number of PDCCH candidates (nrofCandidates) that need to be blindly detected at each aggregation level, that is, a value of aggregationLevelx.

If a value of aggregationLevelx in the second search space set group is configured to {aggregationLevel1=n8, aggregationLevel2=n4, aggregationLevel4=n4, aggregationLevel8=n2, aggregationLevel16=n0}, a value of aggregationLevelx in the first search space set group may be configured to {aggregationLevel1=n8, aggregationLevel2=n6, aggregationLevel4=n6, aggregationLevel8=n4, aggregationLevel 16=n2} .

That is, the number of PDCCH candidates that need to be blindly detected at each aggregation level in the second search space set group with a relatively large monitoring period is configured to be greater than or equal to the number of PDCCH candidates that need to be blindly detected at each aggregation level in the first search space set group with a relatively small monitoring period, so that the following objective can be achieved: a frequency domain monitoring location set obtained by the terminal based on the second search space set group belongs to a subset of a frequency domain monitoring location set obtained based on the first search space set group.

In the foregoing embodiment, optionally, to ensure that numbers of PDCCH candidates that need to be blindly detected at aggregation levels are in a nested relationship, it may be constrained that the CORESET associated with the second search space set group is the same as the CORESET associated with the first search space set group. Alternatively, it may be expressed as follows: a CORESET associated with a search space included in the second search space set group is the same as a CORESET associated with a search space included in the first search space set group.

In this embodiment of this application, values of the first configuration parameter of the first search space set group and the second configuration parameter of the second search space set group are limited, so that monitoring locations of the second search space set group all belong to monitoring locations of the first search space set group, thereby avoiding scheduling loss when slots of the base station and the terminal are not aligned, ensuring that scheduling information sent by the base station or the terminal can be successfully received by the other party, and improving a success rate of sending the scheduling information.

For ease of understanding, the following uses several specific examples to describe the PDCCH monitoring method provided in the embodiments of this application.

In the following examples, the base station may preconfigure two search space set groups for the terminal: a group 0 and a group 1. The group 0 may be the first search space set group in the foregoing embodiments, the group 1 may be the second search space set group in the foregoing embodiments, and a monitoring period of the group 0 is less than a monitoring period of the group 1. Search spaces included in both the group 0 and the group 1 belong to user equipment-specific search spaces UESSs, and the terminal further needs to monitor a PDCCH in a common search space CSS.

### Example 1:

When the terminal monitors a PDCCH based on the group 1, if target DCI is received, the terminal switches from the group 1 to the group 0, and starts monitoring a PDCCH based on the group 0. The target DCI needs to meet at least one of the following conditions:
the target DCI is DCI scrambled by using a C-RNTI, an MCS-C-RNTI, or a CS-RNTI; or
the target DCI is DCI scrambled by using a C-RNTI, an MCS-C-RNTI, or a CS-RNTI in a UESS; or
the target DCI is DCI scrambled by using a C-RNTI, an MCS-C-RNTI, or a CS-RNTI in a UESS or a CSS type 3.

In this example, a possible reason for switching from the search space set group 1 to the search space set group 0 (that is, switching from a search space set group with a large monitoring period to a search space set group with a small monitoring period) is that after data of the terminal arrives, the terminal turns from the large monitoring period to the small monitoring period, to facilitate fast data scheduling. A sign of the "data arrives" is that the terminal receives scheduling DCI. In a current standard, the scheduling DCI corresponds to DCI scrambled by using a C-RNTI, an MCS-C-RNTI, or a CS-RNTI.

In the current standard, the terminal may monitor, in a UESS and a CSS type 3, the DCI scrambled by using the C-RNTI, the MCS-C-RNTI, or the CS-RNTI. Therefore, the DCI scrambled by using the C-RNTI, the MCS-C-RNTI, or the CS-RNTI may be DCI detected in the UESS or the CSS type 3.

The terminal keeps monitoring a CSS other than a UESS. Therefore, a search space in which the DCI scrambled by using the C-RNTI, the MCS-C-RNTI, or the CS-RNTI is detected may be further determined. For example, only when the DCI scrambled by using the C-RNTI, the MCS-C-RNTI, or the CS-RNTI is detected in the UESS, the terminal switches from the search space set group 1 to the search space set group 0. When the DCI scrambled by using the C-RNTI, the MCS-C-RNTI, or the CS-RNTI is detected in the CSS, the terminal does not switch between the search space set groups. This can be more flexibly adapted to a data amount. For example, when a large amount of data arrives at the terminal, the terminal is scheduled in the UESS, and then the terminal switches from the search space set group 1 to the search space set group 0, to quickly perform data scheduling. If only a small amount of data arrives at the terminal, the terminal may be scheduled in the CSS. After data transmission is completed, the terminal may still monitor a PDCCH based on the search space set group 1 (with a relatively large monitoring period), thereby reducing terminal power consumption, and reducing signaling overheads. It may be understood that, in this embodiment of the present application, monitoring periods of the search space set group 1 and the search space set group 0 and a relationship between the two are not limited.

### Example 2:

When the terminal monitors a PDCCH based on the search space set group 1, if the terminal sends a PRACH, the terminal may switch from the search space set group 1 to the search space set group 0.

In this example, a possible reason for switching from the search space set group 1 to the search space set group 0 (that is, switching from a search space set group with a large monitoring period to a search space set group with a small monitoring period) is that when the terminal is in an abnormal state, the terminal needs to switch to a relatively small monitoring period to monitor a PDCCH, to facilitate quick recovery. The abnormal state may include a radio link failure, a beam failure, uplink out-of-synchronization, or the like. In these cases, the terminal initiates a random access procedure to recover to normal. In these cases, a priority of recovering to a normal state needs to be higher than that of saving energy. Therefore, the terminal needs to switch back to the search space set group 0. The first step to recover from the abnormal state is sending a PRACH to the base station by the terminal. Therefore, the PRACH may be used as a possible determining condition, and the terminal switches back to the search space set group 0 under this condition.

In this example, specific time at which the terminal starts monitoring a PDCCH based on the search space set group 0 may be further refined.

For example, it is easy to start monitoring a PDCCH based on the search space set group 0 in a slot next to that of sending the PRACH by the terminal. Alternatively, when the terminal receives DCI scrambled by using an RA-RNTI, and the DCI corresponds to contention-free access, the terminal starts monitoring a PDCCH based on the search space set group 0 after the DCI (for example, in a slot next to that of the DCI). It may be understood that, in this embodiment of the present application, monitoring periods of the search space set group 1 and the search space set group 0 and a relationship between the two are not limited.

After sending the PRACH, the terminal receives an RAR sent by the base station. The RAR is scheduled by using the DCI scrambled by using the RA-RNTI. In a contention-free access case, after the terminal receives the DCI scrambled by using the RA-RNTI, it indicates that access of the terminal succeeds. Then, the terminal usually starts data scheduling. However, in a CSS type 1, the DCI scrambled by using the RA-RNTI is not affected by switching of the search space set group 0 or the search space set group 1. Therefore, after receiving the DCI scrambled by using the RA-RNTI, the terminal may switch back to the search space set group 0. It may be understood that, in this embodiment of the present application, monitoring periods of the search space set group 1 and the search space set group 0 and a relationship between the two are not limited.

### Example 3:

In Example 2, for a contention-free-based RACH (CFRA) procedure, after receiving a PDCCH scrambled by using an RA-RNTI, the terminal switches from the search space set group 1 to the search space set group 0. Considering time for the terminal to parse the RAR, there is a delay to take effect (how long to start switching to the search space set group 0 after the RAR is received). When the terminal receives the PDCCH scrambled by using the RA-RNTI, it does not mean that the RACH succeeds. This is because a PDSCH scheduled by the PDCCH may not include an RAR of the terminal. In this case, the RAR actually fails to be received, and the RACH also fails (the PDSCH scheduled by using the RA-RNTI may carry RARs of a plurality of terminals).

Therefore, in this example, the terminal may switch between the search space set groups, and start monitoring a PDCCH based on the search space set group 0 after N time units after the RAR is received. Alternatively, the terminal may switch between the search space set groups, and start monitoring a PDCCH based on the search space set group 0 in a first slot after N time units after the RAR is received. It may be understood that, in this embodiment of the present application, monitoring periods of the search space set group 1 and the search space set group 0 and a relationship between the two are not limited.

### Example 4:

In Example 2, after sending the PRACH (first signal), the terminal switches from the search space set group 1 to the search space set group 0. In this example, for a contention-based RACH procedure in an RRC connected state, another condition for triggering the terminal to switch between the search space set groups is added based on Example 2. That is, after sending a second signal to the base station, the terminal switches from the search space set group 1 to the search space set group 0. A process in which the terminal sends the second signal to the base station may be a process in which the terminal sends a signal to the base station after the terminal sends the first signal to the base station and receives the RAR returned by the base station for the first signal.

In this example, a reason that the terminal initiates the contention-based RACH (CBRA, that is, the second signal includes a C-RNTI MAC CE) procedure in the RRC connected state may be that a beam failure occurs, and the terminal requests beam failure recovery ( BFR), or the terminal requests uplink resource scheduling, or the terminal receives a PDCCH orderfrom the base station.

In this example, for the contention-based RACH procedure, if the second signal includes the C-RNTI MAC CE, and if the terminal currently monitors a PDCCH based on the search space set group 1 with a relatively large monitoring period, after the terminal sends the second signal, the terminal may switch to the search space set group 0 with a relatively small monitoring period to monitor a PDCCH.

Alternatively, when ra-ContentionResolutionTimer runs, the terminal may switch to the search space set group 0 to monitor a PDCCH. It may be understood that, in this embodiment of the present application, monitoring periods of the search space set group 1 and the search space set group 0 and a relationship between the two are not limited.

### Example 5:

When the terminal monitors a PDCCH based on the search space set group 1, if the terminal sends a PRACH or an SR, the terminal may switch from the search space set group 1 to the search space set group 0.

In this example, specific time at which the terminal starts monitoring a PDCCH based on the search space set group 0 may be further refined. For example, the terminal starts monitoring a PDCCH based on the search space set group 0 in a slot next to that of sending the PRACH or the SR by the terminal.

Example 1 is directed at a case in which downlink data arrives. After uplink data arrives, the terminal also needs to switch from the search space set group with a large monitoring period to the search space set group with a small monitoring period, to quickly perform data scheduling. After the uplink data arrives, a method for requesting an uplink resource by the terminal may include the following two types: the terminal sends an SR, or the terminal sends a PRACH. Therefore, in this example, both may be used as conditions for the terminal to switch from the search space set group 1 back to the search space set group 0. It may be understood that, in this embodiment of the present application, monitoring periods of the search space set group 1 and the search space set group 0 and a relationship between the two are not limited.

### Example 6:

When configuring the search space set groups for the terminal, the base station may configure a timer SSSG0-InactivityTimer for the search space set group 0. When the timer runs, the terminal monitors a PDCCH based on the search space set group 0. After the timer expires, the terminal switches to the search space set group 1, and monitors a PDCCH by using the search space set group with a relatively large monitoring period.

In addition, for a semi-persistent scheduling scenario, during semi-persistent scheduling, a DRX retransmission timer may be triggered to be started. When the DRX retransmission timer runs, there may be retransmitted data, and the terminal needs to monitor a PDCCH scrambled by using a CS-RNTI. Then, when a corresponding retransmission timer runs, if the terminal monitors a PDCCH based on the search space set group 1 with a relatively large monitoring period, a retransmission scheduling delay may be increased.

Therefore, in this example, when the retransmission timer runs, the terminal may switch to the search space set group 0 with a relatively small monitoring period to monitor a PDCCH, to reduce a data delay. If the terminal detects no DCI in the search space set group 0 during running of the retransmission timer, after the retransmission timer expires, the terminal may switch between the search space set groups, switch from the search space set group 0 with a relatively small monitoring period to the search space set group 1 with a relatively large monitoring period, and monitor a PDCCH based on the search space set group 1, to reduce power consumption of the terminal. It may be understood that, in this embodiment of the present application, monitoring periods of the search space set group 1 and the search space set group 0 and a relationship between the two are not limited.

### Example 7:

In Example 1 to Example 6, when configuring the search space set groups for the terminal, the base station may further limit values of configuration parameters of the search space set groups, so that the configuration parameters of the search space set group 0 and the search space set group 1 are in a nested relationship, and monitoring locations of the search space set group 1 all belong to monitoring locations of the search space set group 0. That is, the monitoring locations of the search space set group 1 are a subset of the monitoring locations of the search space set group 0.

In this way, when two sides of slots of the base station and the terminal are not aligned due to some errors, scheduling information sent by the base station can still be received by the terminal.

For example, in a time dimension, a monitoring period of a search space in the group 1 may be configured to 5 slots (slot), and a monitoring period of a search space in the group 0 may be configured to 1 slot. Alternatively, a monitoring period of a search space in the group 1 may be configured to 6 slots, and a monitoring period of a search space in the group 0 may be configured to 2 slots. In this way, the monitoring period of the search space in the group 1 is an integer multiple of the monitoring period of the search space in the group 0, so that a monitoring slot set obtained by the terminal based on the monitoring period of the group 1 belongs to a subset of a monitoring slot set obtained based on the monitoring period of the group 0.

On the basis of configuring the monitoring periods, a symbol set requiring monitoring in the group 1 may be further configured to a subset of a symbol set requiring monitoring in the group 0.

For another example, in a frequency dimension, CORESETs associated with search spaces included in the group 0 and the group 1 may be configured to be the same, and the number of PDCCH candidates that need to be blindly detected at each aggregation level of the search space in the group 1 with a relatively large monitoring period is configured to be greater than or equal to the number of PDCCH candidates that need to be blindly detected at each aggregation level of the search space in the group 0 with a relatively small monitoring period. In this way, a frequency domain monitoring location set obtained by the terminal based on the group 1 is a subset of a frequency domain monitoring location set obtained based on the group 0.

It may be understood that, in this embodiment of the present application, monitoring periods of the search space set group 1 and the search space set group 0 and a relationship between the two are not limited.

The foregoing mainly describes the solutions provided in embodiments of this application from the perspective of interaction between network elements. It may be understood that, to implement the foregoing functions, each network element, such as the terminal and the network device, includes a hardware structure or a software module corresponding to each function, or a combination thereof. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, function module division may be performed on the terminal based on the foregoing method example. For example, each function module may be obtained through division corresponding to each function, or one or more functions may be integrated into one function module. The integrated module may be implemented in a form of hardware, or may be implemented in a form of a software function module. It should be noted that, in embodiments of this application, division into the modules is an example and is merely logical function division, and may be other division during actual implementation. The following provides a description by using an example in which one or more functions are integrated into one function module.

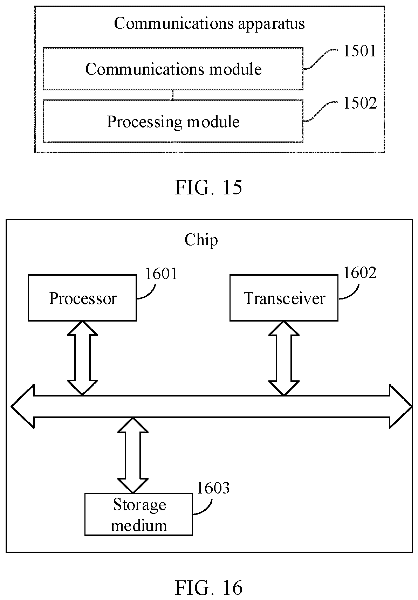

FIG. 15 is a schematic diagram of a structure of a communications apparatus according to an embodiment of this application. As shown in FIG. 15, the communications apparatus includes a communications module 1501 and a processing module 1502.

Optionally, the communications apparatus may at least perform one of the following solutions:
Solution 1: The communications module 1501 is configured to receive search space information configured by a network device. The search space information includes information about a first search space set group and a second search space set group.

The processing module 1502 is configured to: when a terminal monitors a PDCCH based on the second search space set group, if the terminal receives downlink control information DCI used for data scheduling, stop monitoring a PDCCH based on the second search space set group, and start monitoring a PDCCH based on the first search space set group.

In a possible implementation, the downlink control information DCI used for data scheduling includes DCI scrambled by using any one of the following RNTIs:
a cell radio network temporary identifier C-RNTI, a modulation and coding scheme radio network temporary identifier MCS-C-RNTI, or a configured scheduling radio network temporary identifier CS-RNTI.

In a possible implementation, the downlink control information DCI used for data scheduling is DCI in a user equipment-specific search space UESS or DCI in a type 3 common search space CSS type 3.

In a possible implementation, the first search space set group has a first configuration parameter, and the second search space set group has a second configuration parameter; and a parameter related to time domain monitoring in the second configuration parameter is a subset of a parameter related to time domain monitoring in the first configuration parameter; and/or a parameter related to frequency domain monitoring in the second configuration parameter is a subset of a parameter related to frequency domain monitoring in the first configuration parameter.

In a possible implementation, the parameter related to time domain monitoring in the first configuration parameter includes a monitoring period of the first search space set group, and the parameter related to time domain monitoring in the second configuration parameter includes a monitoring period of the second search space set group; and correspondingly, that a parameter related to time domain monitoring in the second configuration parameter is a subset of a parameter related to time domain monitoring in the first configuration parameter may be: the monitoring period of the second search space set group is an integer multiple of the monitoring period of the first search space set group.

In a possible implementation, the parameter related to time domain monitoring in the first configuration parameter includes a monitoring symbol set of the first search space set group, and the parameter related to time domain monitoring in the second configuration parameter includes a monitoring symbol set of the second search space set group; and correspondingly, that a parameter related to time domain monitoring in the second configuration parameter is a subset of a parameter related to time domain monitoring in the first configuration parameter may be: the monitoring symbol set of the second search space set group is a subset of the monitoring symbol set of the first search space set group.

In a possible implementation, the parameter related to frequency domain monitoring in the first configuration parameter includes a frequency domain monitoring location set of the first search space set group, and the parameter related to frequency domain monitoring in the second configuration parameter includes a frequency domain monitoring location set of the second search space set group; and correspondingly, that a parameter related to frequency domain monitoring in the second configuration parameter is a subset of a parameter related to frequency domain monitoring in the first configuration parameter may be: the frequency domain monitoring location set of the second search space set group is a subset of the frequency domain monitoring location set of the first search space set group.

For related information of the downlink control information DCI used for data scheduling, the first configuration parameter, and the second configuration parameter, refer to the embodiment shown in FIG. 4. Details are not described herein again.

Solution 2: The communications module 1501 is configured to receive search space information configured by a network device. The search space information includes information about a first search space set group and a second search space set group.

The processing module 1502 is configured to: when a terminal monitors a PDCCH based on the second search space set group, if the terminal sends a first signal to the network device, stop, after the first signal is sent, monitoring a PDCCH based on the second search space set group, and start monitoring a PDCCH based on the first search space set group. The first signal includes at least one of the following signals or channels: a random access preamble, a scheduling request (SR), a hybrid automatic repeat request negative acknowledgment (NACK), and/or a physical uplink shared channel (PUSCH).

In a possible implementation, the processing module 1502 is configured to stop, in a next slot after the terminal sends the preamble, monitoring a PDCCH based on the second search space set group, and start monitoring a PDCCH based on the first search space set group.

In a possible implementation, the processing module 1502 is configured to: when the terminal receives DCI scrambled by using a random access radio network temporary identifier (RA-RNTI), if the preamble is used for contention-free access, stop monitoring a PDCCH based on the second search space set group, and start monitoring a PDCCH based on the first search space set group.

In a possible implementation, the processing module 1502 is configured to: when the terminal receives a random access response (RAR) returned by the network device for the first signal, if the preamble is used for contention-free access, stop monitoring a PDCCH based on the second search space set group, and start monitoring a PDCCH based on the first search space set group.

In a possible implementation, the processing module 1502 is configured to stop monitoring a PDCCH based on the second search space set group, and start monitoring a PDCCH based on the first search space set group after a preset number of time units after the terminal receives the DCI scrambled by using the RA-RNTI, or after a preset number of time units after the terminal receives the RAR returned by the network device for the first signal.

The time unit includes any one of the following:
an orthogonal frequency division multiplexing (OFDM) symbol, a slot, or a millisecond.

In a possible implementation, the processing module 1502 is configured to stop monitoring a PDCCH based on the second search space set group, and start monitoring a PDCCH based on the first search space set group in a first slot after the preset number of time units after the terminal receives the DCI scrambled by using the RA-RNTI, or in a first slot after the preset number of time units after the terminal receives the RAR returned by the network device for the first signal.

In a possible implementation, the processing module 1502 is configured to: after the terminal receives a RAR returned by the network device for the first signal, when the terminal sends a second signal to the network device, stop, after the terminal sends the second signal, monitoring a PDCCH based on the second search space set group, and start monitoring a PDCCH based on the first search space set group if the preamble is used for contention access, and the second signal includes a C-RNTI MAC control element.

In a possible implementation, the processing module 1502 is configured to: after the terminal sends the second signal, when a random access contention resolution timer runs, stop monitoring a PDCCH based on the second search space set group, and start monitoring a PDCCH based on the first search space set group.

In a possible implementation, the processing module 1502 is configured to: when a retransmission timer runs, stop monitoring a PDCCH based on the second search space set group, and start monitoring a PDCCH based on the first search space set group. The retransmission timer includes a discontinuous reception downlink retransmission timer or a discontinuous reception uplink retransmission timer.

In a possible implementation, the first search space set group has a first configuration parameter, and the second search space set group has a second configuration parameter; and a parameter related to time domain monitoring in the second configuration parameter is a subset of a parameter related to time domain monitoring in the first configuration parameter; and/or a parameter related to frequency domain monitoring in the second configuration parameter is a subset of a parameter related to frequency domain monitoring in the first configuration parameter.

In a possible implementation, the parameter related to time domain monitoring in the first configuration parameter includes a monitoring period of the first search space set group, and the parameter related to time domain monitoring in the second configuration parameter includes a monitoring period of the second search space set group; and correspondingly, that a parameter related to time domain monitoring in the second configuration parameter is a subset of a parameter related to time domain monitoring in the first configuration parameter may be: the monitoring period of the second search space set group is an integer multiple of the monitoring period of the first search space set group.

In a possible implementation, the parameter related to time domain monitoring in the first configuration parameter includes a monitoring symbol set of the first search space set group, and the parameter related to time domain monitoring in the second configuration parameter includes a monitoring symbol set of the second search space set group; and correspondingly, that a parameter related to time domain monitoring in the second configuration parameter is a subset of a parameter related to time domain monitoring in the first configuration parameter may be: the monitoring symbol set of the second search space set group is a subset of the monitoring symbol set of the first search space set group.

In a possible implementation, the parameter related to frequency domain monitoring in the first configuration parameter includes a frequency domain monitoring location set of the first search space set group, and the parameter related to frequency domain monitoring in the second configuration parameter includes a frequency domain monitoring location set of the second search space set group; and correspondingly, that a parameter related to frequency domain monitoring in the second configuration parameter is a subset of a parameter related to frequency domain monitoring in the first configuration parameter may be: the frequency domain monitoring location set of the second search space set group is a subset of the frequency domain monitoring location set of the first search space set group.

For related information of the first signal, the second signal, the first configuration parameter, and the second configuration parameter, refer to the embodiment shown in FIG. 6. Details are not described herein again.

In an example, with reference to the terminal shown in FIG. 3, the communications module 1501 in FIG. 15 may be implemented by the communications interface 304 in FIG. 3, and the processing module 1502 in FIG. 15 may be implemented by the processor 301 in FIG. 3. This is not limited in this embodiment of this application.

An embodiment of this application further provides a computer-readable storage medium. The computer-readable storage medium stores computer instructions. When the computer-readable storage medium runs on a communications apparatus, the communications apparatus is enabled to perform the method shown in FIG. 4 or FIG. 6. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL) or wireless (for example, infrared, radio, or microwave) manner. The computer- readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive (SSD)), or the like.

An embodiment of this application further provides a computer program product including computer instructions. When the computer program product runs on a terminal, the terminal is enabled to perform the method shown in FIG. 4 or FIG. 6.

An embodiment of this application further provides a communications system. The communications system includes a network device and a terminal, and the terminal is configured to perform the method shown in FIG. 4 or FIG. 6.

FIG. 16 is a schematic diagram of a structure of a chip according to an embodiment of this application. The chip shown in FIG. 16 may be a general-purpose processor, or may be a dedicated processor. The chip includes a processor 1601. The processor 1601 is configured to support a communications apparatus in performing the method shown in FIG. 4 or FIG. 6.

Optionally, the chip further includes a transceiver 1602. The transceiver 1602 is configured to be controlled by the processor 1601, and is configured to support the communications apparatus in performing the method shown in FIG. 4 or FIG. 6.

Optionally, the chip shown in FIG. 16 may further include a storage medium 1603.

It should be noted that the chip shown in FIG. 16 may be implemented by using the following circuits or components: one or more field programmable gate arrays (FPGA), programmable logic devices (PLD), controllers, state machines, gate logic, discrete hardware components, any other suitable circuits, or any combination of circuits that can perform the functions described throughout this application.

The terminal, the network device, the computer storage medium, the computer program product, and the chip that are provided in the embodiments of this application are all configured to perform the method provided above. Therefore, for beneficial effects that can be achieved by them, refer to beneficial effects corresponding to the method provided above. Details are not described herein again. The scope of the present invention is determined by the scope of the appended claims.

## Claims

1. A physical downlink control channel, PDCCH, monitoring method, wherein the method is performed by a terminal (102), and the method comprises:
receiving (S401), by the terminal (102), search space information configured by a network device (101), wherein the search space information comprises information about a first search space set group, SSSG, and a second SSSG;
the method being **characterized in that**:
when the terminal (102) monitors a PDCCH based on the second SSSG, if the terminal (102) receives downlink control information, DCI, used for data scheduling in a user equipment-specific search space, UESS, stopping (S402), by the terminal (102), monitoring a PDCCH based on the second SSSG and starting monitoring a PDCCH based on the first SSSG, and if the terminal (102) receives DCI used for data scheduling in a type 3 common search space, Type 3 CSS, maintaining, by the terminal (102), monitoring a PDCCH based on the second SSSG, wherein the DCI used for data scheduling comprises DCI scrambled by using any one of the following radio network temporary identifiers, RNTIs:
a cell radio network temporary identifier, C-RNTI, a modulation and coding scheme cell radio network temporary identifier, MCS-C-RNTI, and a configured scheduling radio network temporary identifier, CS-RNTI.

2. The method according to claim 1, wherein the monitoring period of the first SSSG is less than a monitoring period of the second SSSG.

3. The method according to claim 2, wherein the DCI in the UESS is used to schedule the terminal (102) for arrival of large amounts of data in the terminal (102), and wherein the DCI in the Type 3 CSS is used to schedule the terminal (102) for arrival of small amounts of data in the terminal (102).

4. The method according to any one of claims 1 to 3, wherein the first SSSG has a first configuration parameter, and the second SSSG has a second configuration parameter; and
a parameter related to time domain monitoring in the second configuration parameter is a subset of a parameter related to time domain monitoring in the first configuration parameter; and/or
a parameter related to frequency domain monitoring in the second configuration parameter is a subset of a parameter related to frequency domain monitoring in the first configuration parameter.

5. The method according to claim 4, wherein the parameter related to time domain monitoring in the first configuration parameter comprises a monitoring period of the first SSSG, and the parameter related to time domain monitoring in the second configuration parameter comprises a monitoring period of the second SSSG; and
the parameter related to time domain monitoring in the second configuration parameter is a subset of a parameter related to time domain monitoring in the first configuration parameter comprises:
the monitoring period of the second search space set group is an integer multiple of the monitoring period of the first SSSG.

6. The method according to claim 4, wherein the parameter related to time domain monitoring in the first configuration parameter comprises a monitoring symbol set of the first SSSG, and the parameter related to time domain monitoring in the second configuration parameter comprises a monitoring symbol set of the second SSSG; and
the parameter related to time domain monitoring in the second configuration parameter is a subset of a parameter related to time domain monitoring in the first configuration parameter comprises:
the monitoring symbol set of the second SSSG is a subset of the monitoring symbol set of the first SSSG.

7. The method according to claim 4, wherein the parameter related to frequency domain monitoring in the first configuration parameter comprises a frequency domain monitoring location set of the first SSSG, and the parameter related to frequency domain monitoring in the second configuration parameter comprises a frequency domain monitoring location set of the second SSSG; and
the parameter related to frequency domain monitoring in the second configuration parameter is a subset of a parameter related to frequency domain monitoring in the first configuration parameter comprises:
the frequency domain monitoring location set of the second SSSG is a subset of the frequency domain monitoring location set of the first SSSG.

8. A physical downlink control channel, PDCCH, monitoring method, wherein the method is performed by a terminal (102), and the method comprises:
receiving (S601), by the terminal (102), search space information configured by a network device (101), wherein the search space information comprises information about a first search space set group, SSSG, and a second SSSG;
the method being **characterized in that**:
when the terminal (102) monitors a PDCCH based on the second SSSG, if the terminal (102) sends a first signal to the network device (101), stopping (S602), by the terminal (102) after the first signal is sent, monitoring a PDCCH based on the second SSSG, and starting monitoring a PDCCH based on the first SSSG, wherein the first signal comprises a random access preamble or a physical random access channel, PRACH.

9. The method according to claim 8, wherein the stopping, by the terminal (102) after the first signal is sent, monitoring a PDCCH based on the second SSSG, and starting monitoring a PDCCH based on the first SSSG comprises:
stopping, by the terminal (102) in a next slot after the preamble is sent, monitoring a PDCCH based on the second SSSG, and starting monitoring a PDCCH based on the first SSSG.

10. The method according to claim 8, wherein the stopping, by the terminal (102) after the first signal is sent, monitoring a PDCCH based on the second SSSG, and starting monitoring a PDCCH based on the first SSSG comprises:
receiving, by the terminal (102), downlink control information, DCI, scrambled by using a random access radio network temporary identifier, RA-RNTI; and
if the preamble is used for contention-free access, stopping, by the terminal (102), monitoring a PDCCH based on the second SSSG, and starting monitoring a PDCCH based on the first SSSG.

11. The method according to claim 8, wherein the stopping, by the terminal (102) after the first signal is sent, monitoring a PDCCH based on the second SSSG, and starting monitoring a PDCCH based on the first SSSG comprises:
receiving, by the terminal (102), a random access response, RAR, returned by the network device (101) for the first signal; and
if the preamble is used for contention-free access, stopping, by the terminal (102), monitoring a PDCCH based on the second SSSG, and starting monitoring a PDCCH based on the first SSSG.

12. The method according to claim 10 or 11, wherein the stopping, by the terminal (102), monitoring a PDCCH based on the second SSSG, and starting monitoring a PDCCH based on the first SSSG comprises:
stopping monitoring a PDCCH based on the second SSSG, and starting monitoring a PDCCH based on the first SSSG after a preset number of time units after the terminal (102) receives the DCI scrambled by using the RA-RNTI, or after a preset number of time units after the terminal (102) receives the random access response, RAR, returned by the network device (101) for the first signal.

13. The method according to claim 12, wherein the time unit comprises any one of the following:
an orthogonal frequency division multiplexing, OFDM, symbol, a slot, or a millisecond.

14. The method according to claim 12, wherein the stopping monitoring a PDCCH based on the second SSSG, and starting monitoring a PDCCH based on the first SSSG after a preset number of time units after the terminal (102) receives the DCI scrambled by using the RA-RNTI, or after a preset number of time units after the terminal (102) receives the RAR returned by the network device (101) for the first signal comprises:
stopping monitoring a PDCCH based on the second SSSG, and starting monitoring a PDCCH based on the first SSSG in a first slot after the preset number of time units after the terminal (102) receives the DCI scrambled by using the RA-RNTI, or in a first slot after the preset number of time units after the terminal (102) receives the RAR returned by the network device (101) for the first signal.

15. An apparatus, comprising a memory (303), a processor (301), and a computer program that is stored in the memory (303) and that can run on the processor (301), wherein when the processor (301) executes the computer program, the PDCCH monitoring method according to any one of claims 1 to 14 is performed by the apparatus.

## Patentansprüche

1. Verfahren zur Überwachung eines physischen Downlink-Steuerkanals, PDCCH, wobei das Verfahren durch ein Endgerät (102) ausgeführt wird und das Verfahren Folgendes umfasst:
Empfangen (S401) von Suchrauminformationen, die durch eine Netzwerkvorrichtung (101) konfiguriert wurden, durch das Endgerät (102), wobei die Suchrauminformationen Informationen über eine erste Suchraumsatzgruppe, SSSG, und eine zweite SSSG umfassen;
wobei das Verfahren **dadurch gekennzeichnet ist, dass**:
wenn das Endgerät (102) einen PDCCH basierend auf der zweiten SSSG überwacht, wenn das Endgerät (102) Downlink-Steuerinformationen, DCI, empfängt, die für die Datenplanung in einem benutzergerätespezifischen Suchraum, UESS, verwendet werden, Beenden (S402) der Überwachung eines PDCCH basierend auf der zweiten SSSG durch das Endgerät (102) und Beginnen der Überwachung eines PDCCH basierend auf der ersten SSSG, und wenn das Endgerät (102) DCI empfängt, die für die Datenplanung in einem gemeinsamen Suchraum vom Typ 3, CSS vom Typ 3, verwendet werden, Aufrechterhalten der Überwachung eines PDCCH basierend auf der zweiten SSSG durch das Endgerät (102), wobei die für die Datenplanung verwendeten DCI DCI umfassen, die unter Verwendung einer beliebigen der folgenden temporären Funknetzwerkkennungen, RNTI, verschlüsselt sind:
eine temporäre Mobilfunknetzwerkkennung, C-RNTI, eine temporäre Mobilfunknetzwerkkennung mit Modulations- und
Kodierungsschema, MCS-C-RNTI, und eine konfigurierte temporäre Planungsfunknetzwerkkennung, CS-RNTI.

2. Verfahren nach Anspruch 1, wobei der Überwachungszeitraum der ersten SSSG kürzer als ein Überwachungszeitraum der zweiten SSSG ist.

3. Verfahren nach Anspruch 2, wobei die DCI in dem UESS verwendet wird, um das Endgerät (102) für das Eintreffen großer Datenmengen in dem Endgerät (102) einzuplanen, und wobei die DCI in dem CSS vom Typ 3 verwendet werden, um das Endgerät (102) für das Eintreffen kleiner Datenmengen in dem Endgerät (102) einzuplanen.

4. Verfahren nach einem der Ansprüche 1 bis 3, wobei die erste SSSG einen ersten Konfigurationsparameter aufweist und die zweite SSSG einen zweiten Konfigurationsparameter aufweist; und
ein Parameter, der sich auf die Zeitbereichsüberwachung in dem zweiten Konfigurationsparameter bezieht, eine Teilmenge eines Parameters ist, der sich auf die Zeitbereichsüberwachung in dem ersten Konfigurationsparameter bezieht; und/oder
ein Parameter, der sich auf die Frequenzbereichsüberwachung in dem zweiten Konfigurationsparameter bezieht, eine Teilmenge eines Parameters ist, der sich auf die Frequenzbereichsüberwachung in dem ersten Konfigurationsparameter bezieht.

5. Verfahren nach Anspruch 4, wobei der Parameter, der sich auf die Zeitbereichsüberwachung in dem ersten Konfigurationsparameter bezieht, einen Überwachungszeitraum der ersten SSSG umfasst, und der Parameter, der sich auf die Zeitbereichsüberwachung in dem zweiten Konfigurationsparameter bezieht, einen Überwachungszeitraum der zweiten SSSG umfasst; und
der Parameter, der sich auf die Zeitbereichsüberwachung in dem zweiten Konfigurationsparameter bezieht, eine Teilmenge eines Parameters ist, der sich auf die Zeitbereichsüberwachung in dem ersten Konfigurationsparameter bezieht, Folgendes umfasst:
der Überwachungszeitraum der zweiten Suchraumsatzgruppe ist ein ganzzahliges Vielfaches des Überwachungszeitraums der ersten SSSG.

6. Verfahren nach Anspruch 4, wobei der Parameter, der sich auf die Zeitbereichsüberwachung in dem ersten Konfigurationsparameter bezieht, einen Überwachungssymbolsatz der ersten SSSG umfasst, und der Parameter, der sich auf die Zeitbereichsüberwachung in dem zweiten Konfigurationsparameter bezieht, einen Überwachungssymbolsatz der zweiten SSSG umfasst; und
der Parameter, der sich auf die Zeitbereichsüberwachung in dem zweiten Konfigurationsparameter bezieht, eine Teilmenge eines Parameters ist, der sich auf die Zeitbereichsüberwachung in dem ersten Konfigurationsparameter bezieht, Folgendes umfasst:
der Überwachungssymbolsatz der zweiten SSSG eine Teilmenge des Überwachungssymbolsatzes der ersten SSSG ist.

7. Verfahren nach Anspruch 4, wobei der Parameter, der sich auf die Frequenzbereichsüberwachung in dem ersten Konfigurationsparameter bezieht, einen Frequenzbereichsüberwachungsstandortsatz der ersten SSSG umfasst, und der Parameter, der sich auf die Frequenzbereichsüberwachung in dem zweiten Konfigurationsparameter bezieht, einen Frequenzbereichsüberwachungsstandortsatz der zweiten SSSG umfasst; und
der Parameter, der sich auf die Frequenzbereichsüberwachung in dem zweiten Konfigurationsparameter bezieht, eine Teilmenge eines Parameters ist, der sich auf die Frequenzbereichsüberwachung in dem ersten Konfigurationsparameter bezieht, umfasst Folgendes:
der Frequenzbereichsüberwachungsstandortsatz der zweiten SSSG ist eine Teilmenge des Frequenzbereichsüberwachungsstandortsatzes der ersten SSSG.

8. Verfahren zur Überwachung eines physischen Downlink-Steuerkanals, PDCCH, wobei das Verfahren durch ein Endgerät (102) ausgeführt wird und das Verfahren Folgendes umfasst:
Empfangen (S601) von Suchrauminformationen, die durch eine Netzwerkvorrichtung (101) konfiguriert wurden, durch das Endgerät (102), wobei die Suchrauminformationen Informationen über eine erste Suchraumsatzgruppe, SSSG, und eine zweite SSSG umfassen;
wobei das Verfahren **dadurch gekennzeichnet ist, dass**:
wenn das Endgerät (102) einen PDCCH basierend auf der zweiten SSSG überwacht, wenn das Endgerät (102) ein erstes Signal an die Netzwerkvorrichtung (101) sendet, Beenden (S602) der Überwachung eines PDCCH basierend auf der zweiten SSSG durch das Endgerät (102), nachdem das erste Signal gesendet wurde, und Beginnen der Überwachung eines PDCCH basierend auf der ersten SSSG, wobei das erste Signal einen Zufallszugriffsoberbegriff oder einen physischen Zufallszugriffskanal, PRACH, umfasst.

9. Verfahren nach Anspruch 8, wobei das Beenden der Überwachung eines PDCCH basierend auf der zweiten SSSG durch das Endgerät (102) nach dem Senden des ersten Signals und das Beginnen der Überwachung eines PDCCH basierend auf der ersten SSSG Folgendes umfasst:
Beenden der Überwachung eines PDCCH basierend auf der zweiten SSSG durch das Endgerät (102) in einem nächsten Schlitz nach dem Senden des Oberbegriffs, und Beginnen der Überwachung eines PDCCH basierend auf der ersten SSSG.

10. Verfahren nach Anspruch 8, wobei das Beenden der Überwachung eines PDCCH basierend auf der zweiten SSSG durch das Endgerät (102) nach dem Senden des ersten Signals und das Beginnen der Überwachung eines PDCCH basierend auf der ersten SSSG Folgendes umfasst:
Empfangen von Downlink-Steuerinformationen, DCI, durch das Endgerät (102), die unter Verwendung einer temporären Funknetzwerkkennung mit Zufallszugriff, RA-RNTI, verschlüsselt wurden; und
wenn der Oberbegriff für konfliktfreien Zugriff verwendet wird, Beenden der Überwachung eines PDCCH basierend auf der zweiten SSSG durch das Endgerät (102) und Beginnen der Überwachung eines PDCCH basierend auf der ersten SSSG.

11. Verfahren nach Anspruch 8, wobei das Beenden der Überwachung eines PDCCH basierend auf der zweiten SSSG durch das Endgerät (102) nach dem Senden des ersten Signals und das Beginnen der Überwachung eines PDCCH basierend auf der ersten SSSG Folgendes umfasst:
Empfangen einer Zufallszugriffsantwort, RAR, durch das Endgerät (102), die durch die Netzwerkvorrichtung (101) für das erste Signal zurückgegeben wird; und
wenn der Oberbegriff für konfliktfreien Zugriff verwendet wird, Beenden der Überwachung eines PDCCH basierend auf der zweiten SSSG durch das Endgerät (102) und Beginnen der Überwachung eines PDCCH basierend auf der ersten SSSG.

12. Verfahren nach Anspruch 10 oder 11, wobei das Beenden der Überwachung eines PDCCH basierend auf der zweiten SSSG durch das Endgerät (102) und das Beginnen der Überwachung eines PDCCH basierend auf der ersten SSSG Folgendes umfasst:
Beenden der Überwachung eines PDCCH basierend auf der zweiten SSSG und Starten der Überwachung eines PDCCH basierend auf der ersten SSSG nach einer voreingestellten Anzahl von Zeiteinheiten, nachdem das Endgerät (102) die unter Verwendung des RA-RNTI verschlüsselten DCI empfangen hat, oder nach einer voreingestellten Anzahl von Zeiteinheiten, nachdem das Endgerät (102) die durch die Netzwerkvorrichtung (101) für das erste Signal zurückgegebene Zufallszugriffsantwort, RAR, empfangen hat.

13. Verfahren nach Anspruch 12, wobei die Zeiteinheit ein beliebiges des Folgenden umfasst:
ein orthogonales Frequenzmultiplexsymbol, OFDM-Symbol, einen Schlitz oder eine Millisekunde.

14. Verfahren nach Anspruch 12, wobei das Beenden der Überwachung eines PDCCH basierend auf der zweiten SSSG und Starten der Überwachung eines PDCCH basierend auf der ersten SSSG nach einer voreingestellten Anzahl von Zeiteinheiten, nachdem das Endgerät (102) die unter Verwendung des RA-RNTI verschlüsselten DCI empfangen hat, oder nach einer voreingestellten Anzahl von Zeiteinheiten, nachdem das Endgerät (102) die durch die Netzwerkvorrichtung (101) für das erste Signal zurückgegebene RAR empfangen hat, Folgendes umfasst:
Beenden der Überwachung eines PDCCH basierend auf der zweiten SSSG und Starten der Überwachung eines PDCCH basierend auf der ersten SSSG in einem ersten Schlitz nach der voreingestellten Anzahl von Zeiteinheiten, nachdem das Endgerät (102) die unter Verwendung des RA-RNTI verschlüsselten DCI empfangen hat, oder in einem ersten Schlitz nach der voreingestellten Anzahl von Zeiteinheiten, nachdem das Endgerät (102) die durch die Netzwerkvorrichtung (101) für das erste Signal zurückgegebene RAR empfangen hat.

15. Vorrichtung, umfassend einen Speicher (303), einen Prozessor (301) und ein Computerprogramm, das in dem Speicher (303) gespeichert ist und auf dem Prozessor (301) ausgeführt werden kann, wobei, wenn der Prozessor (301) das Computerprogramm ausführt, das Verfahren zur Überwachung des PDCCH nach einem der Ansprüche 1 bis 14 ausgeführt wird.

## Revendications

1. Procédé de surveillance d'un canal physique de commande de liaison descendante, PDCCH, dans lequel le procédé est réalisé par un terminal (102), et le procédé comprend :
la réception (S401), par le terminal (102), d'informations d'espace de recherche configurées par un dispositif réseau (101), dans lequel les informations d'espace de recherche comprennent des informations sur un premier groupe d'ensembles d'espaces de recherche, SSSG, et un second SSSG ;
le procédé étant **caractérisé en ce que** :
lorsque le terminal (102) surveille un PDCCH sur la base du second SSSG, si le terminal (102) reçoit des informations de commande de liaison descendante, DCI, utilisées pour la planification de données dans un espace de recherche spécifique à l'équipement utilisateur, UESS, l'arrêt (S402), par le terminal (102), de la surveillance d'un PDCCH sur la base du second SSSG et le démarrage de la surveillance d'un PDCCH sur la base du premier SSSG, et si le terminal (102) reçoit des DCI utilisées pour la planification de données dans un espace de recherche commun de type 3, CSS de type 3, le maintien, par le terminal (102), de la surveillance d'un PDCCH sur la base du second SSSG, dans lequel les DCI utilisées pour la planification de données comprennent des DCI brouillées en utilisant l'un quelconque des identifiants temporaires de réseau radio, RNTI, suivants :
un identifiant temporaire de réseau radio cellulaire, C-RNTI, un identifiant temporaire de réseau radio cellulaire de schéma de modulation et de codage, MCS-C-RNTI, et un identifiant temporaire de réseau radio de planification configuré, CS-RNTI.

2. Procédé selon la revendication 1, dans lequel la période de surveillance du premier SSSG est inférieure à une période de surveillance du second SSSG.

3. Procédé selon la revendication 2, dans lequel les DCI dans l'UESS sont utilisées pour planifier le terminal (102) pour l'arrivée de grandes quantités de données dans le terminal (102), et dans lequel les DCI dans le CSS de type 3 sont utilisées pour planifier le terminal (102) pour l'arrivée de petites quantités de données dans le terminal (102).

4. Procédé selon l'une quelconque des revendications 1 à 3, dans lequel le premier SSSG a un premier paramètre de configuration, et le second SSSG a un second paramètre de configuration ; et
un paramètre lié à la surveillance de domaine temporel dans le second paramètre de configuration est un sous-ensemble d'un paramètre lié à la surveillance de domaine temporel dans le premier paramètre de configuration ; et/ou
un paramètre lié à la surveillance de domaine fréquentiel dans le second paramètre de configuration est un sous-ensemble d'un paramètre lié à la surveillance de domaine fréquentiel dans le premier paramètre de configuration.

5. Procédé selon la revendication 4, dans lequel le paramètre lié à la surveillance de domaine temporel dans le premier paramètre de configuration comprend une période de surveillance du premier SSSG, et le paramètre lié à la surveillance de domaine temporel dans le second paramètre de configuration comprend une période de surveillance du second SSSG ; et
le paramètre lié à la surveillance de domaine temporel dans le second paramètre de configuration est un sous-ensemble d'un paramètre lié à la surveillance de domaine temporel dans le premier paramètre de configuration comprend :
la période de surveillance du second groupe d'ensembles d'espaces de recherche est un multiple entier de la période de surveillance du premier SSSG.

6. Procédé selon la revendication 4, dans lequel le paramètre lié à la surveillance de domaine temporel dans le premier paramètre de configuration comprend un ensemble de symboles de surveillance du premier SSSG, et le paramètre lié à la surveillance de domaine temporel dans le second paramètre de configuration comprend un ensemble de symboles de surveillance du second SSSG ; et
le paramètre lié à la surveillance de domaine temporel dans le second paramètre de configuration est un sous-ensemble d'un paramètre lié à la surveillance de domaine temporel dans le premier paramètre de configuration comprend :
l'ensemble de symboles de surveillance du second SSSG est un sous-ensemble de l'ensemble de symboles de surveillance du premier SSSG.

7. Procédé selon la revendication 4, dans lequel le paramètre lié à la surveillance de domaine fréquentiel dans le premier paramètre de configuration comprend un ensemble d'emplacements de surveillance de domaine fréquentiel du premier SSSG, et le paramètre lié à la surveillance de domaine fréquentiel dans le second paramètre de configuration comprend un ensemble d'emplacements de surveillance de domaine fréquentiel du second SSSG ; et
le paramètre lié à la surveillance de domaine fréquentiel dans le second paramètre de configuration est un sous-ensemble d'un paramètre lié à la surveillance de domaine fréquentiel dans le premier paramètre de configuration comprend :
l'ensemble d'emplacements de surveillance de domaine fréquentiel du second SSSG est un sous-ensemble de l'ensemble d'emplacements de surveillance de domaine fréquentiel du premier SSSG.

8. Procédé de surveillance d'un canal physique de commande de liaison descendante, PDCCH, dans lequel le procédé est réalisé par un terminal (102), et le procédé comprend :
la réception (S601), par le terminal (102), d'informations d'espace de recherche configurées par un dispositif réseau (101), dans lequel les informations d'espace de recherche comprennent des informations sur un premier groupe d'ensembles d'espaces de recherche, SSSG, et un second SSSG ;
le procédé étant **caractérisé en ce que** :
lorsque le terminal (102) surveille un PDCCH sur la base du second SSSG, si le terminal (102) envoie un premier signal au dispositif réseau (101), l'arrêt (S602), par le terminal (102) après l'envoi du premier signal, de la surveillance d'un PDCCH sur la base du second SSSG, et le démarrage de la surveillance d'un PDCCH sur la base du premier SSSG, dans lequel le premier signal comprend un préambule d'accès aléatoire ou un canal physique d'accès aléatoire, PRACH.

9. Procédé selon la revendication 8, dans lequel l'arrêt, par le terminal (102) après l'envoi du premier signal, de la surveillance d'un PDCCH sur la base du second SSSG, et le démarrage de la surveillance d'un PDCCH sur la base du premier SSSG comprennent :
l'arrêt, par le terminal (102) dans un créneau suivant après l'envoi du préambule, de la surveillance d'un PDCCH sur la base du second SSSG, et le démarrage de la surveillance d'un PDCCH sur la base du premier SSSG.

10. Procédé selon la revendication 8, dans lequel l'arrêt, par le terminal (102) après l'envoi du premier signal, de la surveillance d'un PDCCH sur la base du second SSSG, et le démarrage de la surveillance d'un PDCCH sur la base du premier SSSG comprennent :
la réception, par le terminal (102), d'informations de commande de liaison descendante, DCI, brouillées en utilisant un identifiant temporaire de réseau radio à accès aléatoire, RA-RNTI ; et
si le préambule est utilisé pour un accès sans contention, l'arrêt, par le terminal (102), de la surveillance d'un PDCCH sur la base du second SSSG, et le démarrage de la surveillance d'un PDCCH sur la base du premier SSSG.

11. Procédé selon la revendication 8, dans lequel l'arrêt, par le terminal (102) après l'envoi du premier signal, de la surveillance d'un PDCCH sur la base du second SSSG, et le démarrage de la surveillance d'un PDCCH sur la base du premier SSSG comprennent :
la réception, par le terminal (102), d'une réponse d'accès aléatoire, RAR, renvoyée par le dispositif réseau (101) pour le premier signal ; et
si le préambule est utilisé pour un accès sans contention, l'arrêt, par le terminal (102), de la surveillance d'un PDCCH sur la base du second SSSG, et le démarrage de la surveillance d'un PDCCH sur la base du premier SSSG.

12. Procédé selon la revendication 10 ou 11, dans lequel l'arrêt, par le terminal (102), de la surveillance d'un PDCCH sur la base du second SSSG, et le démarrage de la surveillance d'un PDCCH sur la base du premier SSSG comprennent :
l'arrêt de la surveillance d'un PDCCH sur la base du second SSSG, et le démarrage de la surveillance d'un PDCCH sur la base du premier SSSG après un nombre prédéfini d'unités de temps après que le terminal (102) a reçu les DCI brouillées en utilisant le RA-RNTI, ou après un nombre prédéfini d'unités de temps après que le terminal (102) a reçu la réponse d'accès aléatoire, RAR, renvoyée par le dispositif réseau (101) pour le premier signal.

13. Procédé selon la revendication 12, dans lequel l'unité de temps comprend l'un quelconque des éléments suivants :
un symbole de multiplexage par répartition orthogonale de la fréquence, OFDM, un créneau ou une milliseconde.

14. Procédé selon la revendication 12, dans lequel l'arrêt de la surveillance d'un PDCCH sur la base du second SSSG, et le démarrage de la surveillance d'un PDCCH sur la base du premier SSSG après un nombre prédéfini d'unités de temps après que le terminal (102) a reçu les DCI brouillées en utilisant le RA-RNTI, ou après un nombre prédéfini d'unités de temps après que le terminal (102) a reçu la RAR renvoyée par le dispositif réseau (101) pour le premier signal comprend :
l'arrêt de la surveillance d'un PDCCH sur la base du second SSSG, et le démarrage de la surveillance d'un PDCCH sur la base du premier SSSG dans un premier créneau après le nombre prédéfini d'unités de temps après que le terminal (102) a reçu les DCI brouillées en utilisant le RA-RNTI, ou dans un premier créneau après le nombre prédéfini d'unités de temps après que le terminal (102) a reçu la RAR renvoyée par le dispositif réseau (101) pour le premier signal.

15. Appareil, comprenant une mémoire (303), un processeur (301) et un programme informatique qui est stocké dans la mémoire (303) et qui peut s'exécuter sur le processeur (301), dans lequel lorsque le processeur (301) exécute le programme informatique, le procédé de surveillance de PDCCH selon l'une quelconque des revendications 1 à 14 est réalisé par l'appareil.
